# EUROPEAN PATENT APPLICATION

(11) **EP 4 414 249 A1**
(43) Date of publication of application: **14.08.2024**
(21) Application number: 22948354.0
(22) Date of filing: 29.06.2022
(51) Int. Cl.: B62D 25/20, B60K 1/04, H01M 50/249

(54) **BOX, BATTERY AND ELECTRIC DEVICE**

(71) Applicant: Contemporary Amperex Technology Co., Limited, Ningde, Fujian 352100 (CN)
(72) Inventor: ZHANG, Wenhui, Ningde, Fujian 352100 (CN); LONG, Chao, Ningde, Fujian 352100 (CN); CHEN, Xingdi, Ningde, Fujian 352100 (CN); WANG, Peng, Ningde, Fujian 352100 (CN)
(74) Representative: Ran, Handong
(86) International application number: PCT/CN2022/102241
(87) International publication number: WO 2024/000235

(57) **Abstract**

The present application relates to a box, a battery and an electric device. The box (10) has an accommodating cavity (s) for accommodating a battery cell (20), and the top of the box (10) is configured with a mounting position (141b) on the side facing away from the accommodating cavity (s), wherein the battery (100) is mounted to an external device by means of the top of the box (10), and the mounting position (141b) forms part of the structure of the external device.

## Description

### TECHNICAL FIELD

The present application relates to the technical field of batteries, and more particularly to a box, a battery and an electrical apparatus.

### BACKGROUND

With the increasing maturity of new energy technology, new energy vehicles have gradually come to the attention of the public. The main core technology of new energy vehicles lies in the battery, and the safety and stability of the battery directly determine the performance of the vehicle.

A vehicle generally includes a vehicle body and a battery mounted to the vehicle body, and the battery is generally arranged separately from the vehicle body, resulting in a complex structure of the vehicle.

### SUMMARY OF THE INVENTION

In view of this, the present application provides a battery and an electrical apparatus, aiming at simplifying the structure of a vehicle such that the vehicle has a compact structure and a small size.

In a first aspect, the present application provides a box for a battery. A mounting position is configured on a side of a top portion of the box that faces away from an accommodating cavity. The battery is mounted to an external device via the top portion of the box, and the mounting position forms a partial structure of the external device.

In the solution of the present application, by configuring the mounting position at the top portion of the box of the battery, the mounting position forms the internal structure of a vehicle body, and an integral arrangement of the battery and the vehicle body is formed, so as to avoid the separation of the battery from the vehicle body, so that the vehicle has a simple structure and a smaller size, and is more compact.

In some embodiments, the mounting position includes a mounting hole formed in the top portion of the box.

A fastener is correspondingly provided in each mounting hole, and a corresponding mounted member is mounted and positioned in the mounting hole via the fastener, so that the fixed connection between the mounted member and the external device can be realized while fixing of the mounted member to the box of the battery.

In some embodiments, the box includes a main body and a mounting beam. The main body encloses the accommodating cavity, and a top portion of the main body forms at least part of the top portion of the box. The mounting beam is arranged at the top portion of the main body, and the mounting position is configured on a side of the mounting beam that faces away from the main body. The force on the top portion of the main body is shared by the mounting beam to improve the load-bearing capacity of the box of the battery.

In some embodiments, the mounting beam is fixedly connected to or integrally formed with the main body. When the mounting beam is fixedly connected to the main body, the forming process of the mounting beam and the main body is relatively easy, which can reduce the process cost of the box.

When the mounting beam is integrally formed with the main body, the box, the external device and the mounted member are assembled conveniently.

In some embodiments, the mounting beam includes at least one protrusion, each protrusion protrudes from the top portion of the main body in a direction away from the accommodating cavity, and each protrusion and the main body jointly form a weight-reducing channel; and the mounting position is configured on a side of the protrusion that faces away from the main body.

As the mounting position is formed on the side of each protrusion that faces away from the main body, the mounted member is in direct contact with the structure of the protrusion instead of a top surface when being mounted to the mounting position, thereby distributing the force on the top portion of the box by means of the protrusion, and increasing the load-bearing capacity of the top portion of the box. The arrangement of the weight-reducing channel reduces the weight of each protrusion, thereby reducing the overall weight of the box.

In some embodiments, all the protrusions extend in the same direction and are arranged spaced apart from each other. The plurality of protrusions arranged spaced apart from each other can form a sufficiently large support area and fixing positions to realize large-area support for the mounted member, and can be adapted to the mounting of mounted members of different volumes and sizes.

In some embodiments, the sides of all the protrusions that face away from the main body are located on the same plane. The mounted member is placed on a flat plane for mounting, the mounting is more stable and simple, and a firm connection between the mounted member and the mounting beam can be realized.

In some embodiments, the top portion of the box is configured with a hanging portion, via which the battery is mounted to the external device. The hanging portion refers to a special structure provided on the top portion of the box and configured to be connected to a connector (such as a bolt and a rivet) of the external device. The connector may have one end connected to the hanging portion, and the other end connected to the external device, so as to fixedly connect the battery to the external device.

In some embodiments, the hanging portion includes at least one hanging hole provided in the top portion of the box. The hanging hole may be formed in the top portion of the box by drilling, and the hanging hole allows the connector to pass through itself and be fixed to the structure provided with the hanging hole, so that the external device is connected to the top portion of the box via the connector.

In some embodiments, the box further includes a sealing member arranged at the top portion of the box and configured to be sealingly connected to the external device. In this case, the box of the battery is sealingly connected to the external device via the sealing member, and the sealing is reliable and the cost is low.

In a second aspect, the present application further provides a battery, including the box as described above, and a battery cell accommodated in the box.

In some embodiments, the box includes a main body, the main body encloses the accommodating cavity, the main body includes a carrier located at the top portion of the box and configured to define the accommodating cavity, and the battery cell is arranged at the carrier. The battery cell is arranged below the carrier, and bears the force on the top portion of the box of the battery together with the carrier, thereby increasing the rigidity of the top portion of the box of the battery.

In some embodiments, the battery cell is suspended from the carrier. The battery cell is suspended below the carrier, and a bottom cover is located at a bottom portion of the box. When the interior of the battery is being repaired, the battery cell can be exposed by removing the bottom cover, without the need to remove the carrier, so that the maintenance of the battery is more convenient. Moreover, when repairing the battery, the battery cell can be disassembled from below the carrier. Especially when the carrier is stressed as at least part of the chassis of the vehicle, it is only necessary to disassemble the battery cell from below the carrier without the need to remove the carrier, facilitating the repairing of the battery.

In some embodiments, the battery cell is bonded to the carrier. The bonding of the battery cell to the carrier not only facilitates the connection, but can also simplify the structure of the battery.

In some embodiments, an outer surface of the battery cell that faces the carrier is defined as a first outer surface, and the battery cell includes electrode terminals arranged on an outer surface of the battery cell other than the first outer surface. In this case, the electrode terminals are located on the outer surface of the battery cell other than the first outer surface, and various components (such as a sampling wire harness, a high-voltage wire harness, and a protective structure) connected to each electrode terminal may be arranged by means of a space between the battery cell and the bottom cover and/or a space between the battery cell and an inner side surface of the main body, which is more convenient for the arrangement of the components. Moreover, in this case, by connecting the first outer surface not provided with the electrode terminals to the carrier, the battery cell can be attached to the carrier, so that the space between the battery cell and the carrier can be saved, improving the space utilization rate of the battery.

In some embodiments, the battery cell has a second outer surface arranged opposite to the first outer surface, and the electrode terminals are arranged on the second outer surface. In this case, there is a buffer space between the second outer surface and the bottom cover, and the part of each electrode terminal protruding from the battery cell is located in the buffer space, so that a wire harness and a connecting sheet which are connected to the electrode terminal can be arranged in the buffer space. Moreover, the buffer space can also prevent an external force hitting the bottom cover from acting on the battery cell and damaging the battery cell. Therefore, the buffer space can not only interrupt the influence of the external force, but can also carry out the layout of the wire harnesses, etc.

In a third aspect, the present application further provides an electrical apparatus, including the battery as described above, the battery being configured to supply electric energy to the electrical apparatus.

In some embodiments, the electrical apparatus includes a vehicle, wherein the battery is arranged at a bottom portion of a vehicle body of the vehicle. In this case, the battery is arranged at the bottom portion of the vehicle body, rather than occupying the space inside the vehicle body, thereby facilitating the reduction of the volume and weight of the vehicle body.

In some embodiments, the battery is connected to the vehicle body via the top portion of the box, and the top portion of the box is configured to form at least part of a chassis of the vehicle body. In this case, the space occupied by a gap between the traditional chassis and the battery can be added to the interior of the battery to increase the space of the battery, so that the increase of the energy of the battery is facilitated, and the range of the vehicle can thus be improved.

The details of one or more embodiments of the present application are set forth in the accompanying drawings and the description below. Other features, objectives and advantages of the present application will be apparent from the description, the accompanying drawings and the claims.

### DESCRIPTION OF DRAWINGS

By reading the detailed description of the preferred implementations below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference signs. In the drawings:
Fig. 1 is a schematic structural view of a vehicle provided in some embodiments of the present application;
Fig. 2 is a schematic structural view of a battery cell provided in some embodiments of the present application;
Fig. 3 is a schematic exploded view of a battery provided in some embodiments of the present application;
Fig. 4 is another structural exploded view of a battery according to some embodiments of the present application;
Fig. 5 is an enlarged view of part A in Fig. 4;
Fig. 6 is a partial schematic structural view of a battery according to some embodiments of the present application;
Fig. 7 is an enlarged view of part B of the structure shown in Fig. 6;
Fig. 8 is a top view of the structure shown in Fig. 6;
Fig. 9 is a side view of the structure shown in Fig. 6;
Fig. 10 is a cross-sectional view taken through C-C of the structure shown in Fig. 9;
Fig. 11 is a partial schematic structural view of a battery according to some other embodiments of the present application;
Fig. 12 is a side and exploded view of the structure shown in Fig. 11;
Fig. 13 is a side view of the structure shown in Fig. 11;
Fig. 14 is an enlarged view of part D of the structure shown in Fig. 12;
Fig. 15 is a schematic diagram of an application scenario of the structure shown in Fig. 11;
Fig. 16 is a side view of the structure shown in Fig. 14;
Fig. 17 is a partial schematic structural view of a battery according to some other embodiments of the present application;
Fig. 18 is a side view of the structure shown in Fig. 17;
Fig. 19 is an exploded view of the structure shown in Fig. 18;
Fig. 20 is a cross-sectional view taken through E-E of the structure shown in Fig. 18;
Fig. 21 is a top view of the structure shown in Fig. 17; and
Fig. 22 is a schematic structural view of a battery cell according to some embodiments of the present application.
1000, vehicle; 100, battery; 200, vehicle body; 300, seat; 10, box; 10A, first part; 10B, second part; 11, main body; 11a, carrier; 11b, border; 11c, bottom cover; 11c1, cover portion; 11c2, mounting portion; 11c3, fixing hole; 11c4, fixing member; n, peripheral side wall; n1, first wall section; n2, second wall section; s, accommodating cavity; s1, battery cavity; s2, high-voltage cavity; 12, sealing member; 13, lateral beam; 13a, sub-beam; 13a1, first sub-beam; 13a2, second sub-beam; 131, upper arm beam; 132, lower arm beam; 13a3, hanging portion; k1, hanging hole; 13a4, wiring portion; k2, wiring groove; 14, side-impact reinforcement beam; 141, mounting beam; 141a, protrusion; 141a1, weight-reducing channel; 141b, mounting position; h, top surface of box; h1, top surface of main body; h2, top surface of lateral beam; ha, first region; hb, second region; hc, sealing region; 15, high-voltage compartment; 15a, compartment cover; 15b, compartment casing; 16, middle channel beam; 16a, wiring channel; 16a1, wire passage groove; 161, beam base; 162, beam cover; 20, battery cell; 21, end cover; 21a, electrode terminal; 22. housing; 23. electrode assembly; m1, first outer surface; m2, second outer surface; m3, third outer surface; F1, first direction; F2, second direction.

### DETAILED DESCRIPTION

Embodiments of the technical solutions of the present application will be described in detail below with reference to the accompanying drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally indicates an "or" relationship between the associated objects.

In the description of the embodiments of the present application, the term "plurality of" refers to at least two (including two); similarly, "plurality of groups" refers to at least two (including two) groups, and "plurality of pieces" refers to at least two (including two) pieces.

In the description of the embodiments of the present application, the orientation or position relationships indicated by the technical terms "center", "longitudinal", "transverse", "length ", "width", "thickness", "up", "down", "front", "back", "left", "right", "vertical", "horizontal", "top", "bottom", "inside", "outside", "clockwise", "counterclockwise", "axial", " radial", "peripheral" and the like are based on the orientation or position relationships shown in the drawings, and are only for convenience and simplification of the description of the embodiments of the present application, but do not indicate or imply that the apparatuses or elements referred to must have particular orientations, be constructed and operated in particular orientations, and therefore cannot be construed as a limitation of the embodiments of the present application.

In the description of the embodiments of the present application, unless otherwise expressly specified and limited, the technical terms "mounting," "connected," "connecting," "fixing", and the like shall be understood in a broad sense, which, for example, may be a fixed connection, or a detachable connection or an integral connection; may also be a mechanical connection, or an electrical connection; may be a direct connection, or an indirect connection through an intermediate medium, and may be a communication within two elements or an interactive relationship between two elements. For those of ordinary skill in the art, the specific meanings of the above terms in the embodiments of the present application can be understood according to specific situations.

At present, from the development of market situation, the application of batteries is becoming more and more extensive. Batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the batteries, the market demand is also constantly expanding.

The inventors have noticed that a battery, which is mounted to a vehicle body, is generally arranged separately from the vehicle body, as a result, the structures of the vehicle and the vehicle body need to be configured separately, and the connection structure between the battery and the vehicle body needs to be considered. Such a design will lead to a complex structure of the vehicle, and the battery and the vehicle body both require a certain accommodation space, resulting in that the vehicle has a large size and is unable to achieve light weight.

In order to simplify the structure of the vehicle and achieve light weight, the applicant has found through research that partial structures of the battery and the vehicle body may be integrally configured, so that the partial structure of the battery is the partial structure of the vehicle body, thereby avoiding the separate arrangement of the battery and the vehicle body, making the structure of the vehicle simple.

Based on the above considerations, in order to simplify the structure of the vehicle and achieve light weight, the inventors have conducted in-depth research and designed a box for a battery, in which a battery cell can be accommodated. A mounting position is configured on a side of a top portion of the box that faces away from an accommodating cavity, the battery is mounted to a vehicle body via the top portion of the box, and the mounting position forms a partial structure of the vehicle body. The mounting position is configured to mount a structure such as a seat inside the vehicle body, so that the mounting position is located on the box and is also a part of the vehicle body.

The battery disclosed in the embodiments of the present application may be used in, but not limited to, an electrical apparatus such as a vehicle, a ship, or an aircraft. The battery disclosed in the present application may be used to form a power supply system of the electrical apparatus. A mounting body involved in the present application is a structure of the electrical apparatus for mounting the battery.

Embodiments of the present application provide an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, and so on. The electric toy may include a fixed or mobile electric toy, such as a game console, an electric car toy, an electric ship toy, and an electric airplane toy. The spacecraft may include an airplane, a rocket, a space shuttle, a spaceship, etc.

Hereinafter, for the convenience of illustration, a vehicle 1000 is taken as an example to describe an electrical apparatus according to an embodiment of the present application.

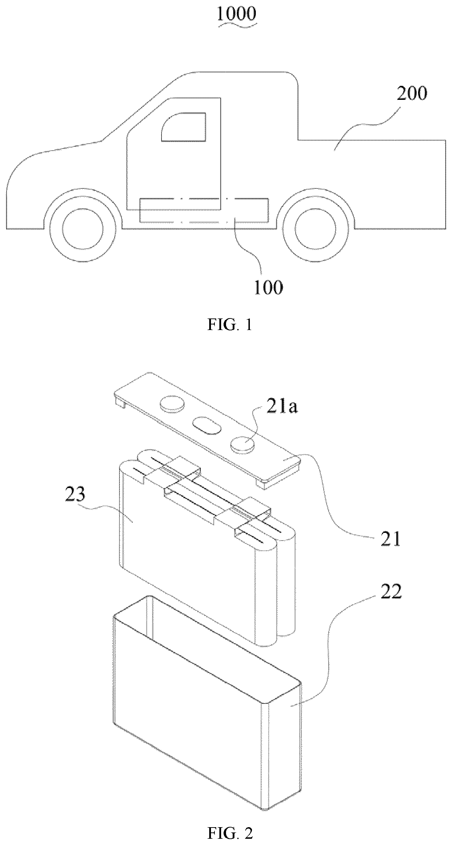

Referring to Fig. 1, Fig. 1 is a schematic structural diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended-range vehicle, etc. The interior of the vehicle 1000 is provided with a battery 100. The battery 100 may be provided at the bottom or head or tail of the vehicle 1000. The battery 100 may be configured to supply power to the vehicle 1000. For example, the battery 100 may be used as an operation power supply of the vehicle 1000. The vehicle 1000 may further include a controller and a motor. The controller is configured to control the battery 100 to power the motor. For example, the controller is used for meeting the operating power demand when the vehicle 1000 is starting, navigating and driving.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

Referring to Fig. 2, Fig. 2 is a schematic structural diagram of a vehicle 1000 according to some embodiments of the present application. The battery cell 20 is the smallest unit constituting the battery 100. As shown in Fig. 2, the battery cell 20 includes an end cover 21, a housing 22, an electrode assembly 23 and other functional components.

The end cover 21 is a component that covers the opening of the housing 22 to isolate the internal environment of the battery cell 20 from the external environment. Without limitation, the shape of the end cover 21 may be adapted to the shape of the housing 22 to match the housing 22. Optionally, the end cover 21 may be made of a material (such as an aluminum alloy) with a certain hardness and strength, so that the end cover 21 is not easy to be deformed when being pressed and collided, the battery cell 20 can have a higher structural strength, and the safety performance can also be improved. The end cover 21 may be provided with functional components such as electrode terminals 21a. The electrode terminals 21a may be used for electrical connection with the electrode assembly 23 for outputting or inputting electric energy of the battery cell 20. In some embodiments, the end cover 21 may also be provided with a pressure relief mechanism for releasing the internal pressure when the internal pressure or temperature of the battery cell 20 reaches a threshold value. The end cover 21 may be made of various materials, such as copper, iron, aluminum, stainless steel, an aluminum alloy, and plastic, which will not be specially limited in the embodiments of the present application. In some embodiments, an insulating member may be also provided on the inner side of the end cover 21. The insulating member may be configured to isolate an electrical connection component 11a2 in the housing 22 from the end cover 21 to reduce the risk of short circuit. Illustratively, the insulating member may be made of plastic, rubber or the like.

The housing 22 is an assembly for matching the end cover 21 to form the internal environment of the battery cell 20. The formed internal environment may be used to accommodate the electrode assembly 23, an electrolyte solution and other components. The housing 22 and the end cover 21 may be separate components, the housing 22 may be provided with an opening, and the internal environment of the battery cell 20 is formed by making the end cover 21 cover the opening at the opening. Without limitation, the end cover 21 and the housing 22 may also be integrated with each other. Specifically, the end cover 21 and the housing 22 may form a common connection face before other components are inserted into the housing. When the interior of the housing 22 needs to be packaged, the end cover 21 then covers the housing 22. The housing 22 may have various shapes and sizes, such as a cuboid, a cylinder and a hexagonal prism. Specifically, the housing 22 may be shaped according to the specific shape and size of the electrode assembly 23. The housing 22 may be made of various materials, such as copper, iron, aluminum, stainless steel, an aluminum alloy, and plastic, which will not be specially limited in the embodiments of the present application.

The electrode assembly 23 is a component of a battery cell 20 where an electrochemical reaction occurs. One or more electrode assemblies 23 may be contained in the housing 22. The electrode assembly 23 is mainly formed by winding or stacking a positive electrode sheet and a negative electrode sheet, and a separator is generally provided between the positive electrode sheet and the negative electrode sheet. The parts of the positive electrode sheet and the negative electrode sheet having active materials constitute a main body 11 of the electrode assembly 23, and the parts of the positive electrode sheet and the negative electrode sheet having no active materials respectively constitute. The positive tab and the negative tab may be located at one end of the main body 11 together or at two ends of the main body 11 respectively. During the charging or discharging process of the battery, the positive active material and the negative active material react with an electrolyte solution, and the tabs are connected to the electrode terminals 21a to form a current loop.

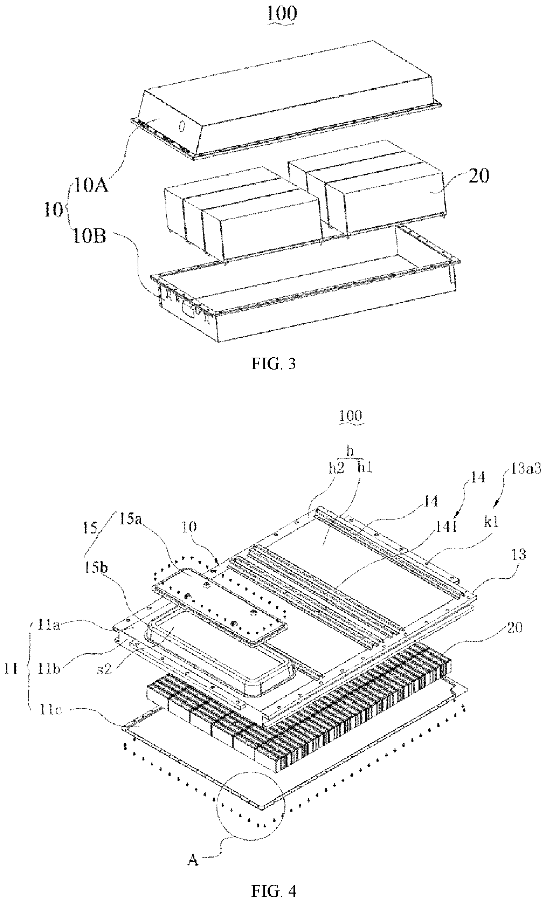

Fig. 3 is a schematic exploded view of a battery 100 according to some embodiments of the present application. The battery 100 includes a battery cell 20 and a box 10, and the box 10 is provided with an accommodating cavity s for accommodating the battery cell 20.

In the battery 100, there may be a plurality of battery cells 20, and the plurality of battery cells 20 may be connected in series or parallel or series-parallel connection, wherein the series-parallel connection means that the plurality of battery cells 20 are connected in both series and parallel. A plurality of battery cells 20 may be directly connected in series or in parallel or in series-parallel, and then an entirety composed of the plurality of battery cells 20 may be accommodated in the box 10. Of course, the battery 100 may alternatively consist in that a plurality of battery cells 20 are first connected in series, in parallel or in series-parallel to form a plurality of battery modules, and the plurality of battery modules are then connected in series or in parallel or in series-parallel to form a whole, and are accommodated in the box 10. The battery 100 may further include other structures. For example, the battery 100 may further include a bus component for electrically connecting the plurality of battery cells 20. Each battery cell 20 may be a secondary battery or a primary battery; or may be a lithium-sulfur battery, a sodium-ion battery or a magnesium-ion battery, but is not limited thereto. The battery cell 20 may be in the shape of a cylinder, a flat body, a cuboid or others.

The box 10 may have various shapes, such as a cylinder or a cuboid, and the specific configuration of the box 10 may take various structural forms.

According to some embodiments of the present application, referring to Fig. 3, the present application provides a box 10 for a battery 200. The box 10 is provided with an accommodating cavity s for accommodating a battery cell 20. The box 10 is used to provide an accommodating space for the battery cell 20, and the box may be of various structures. In some embodiments (as shown in Fig. 3), the box may include a first part 10A and a second part 10B. The first part 10A and the second part 10B are covered by each other, and the first part 10A and the second part 10B jointly define an accommodating space for accommodating the battery cell. The second part 1 may be a hollow structure with one end open, the first part 10A may be a plate-like structure, and the first part 10A covers an opening side of the second part, so that the first part 10A and the second part 10B jointly define the accommodating space. It is also possible that each of the first part 10A and the second part 10B is a hollow structure with one side open, and the opening side of the first part 10A covers the opening side of the second part 10B. Of course, the box 10 formed by the first part 10A and the second part 10B may have various shapes, such as a cylinder or a cuboid.

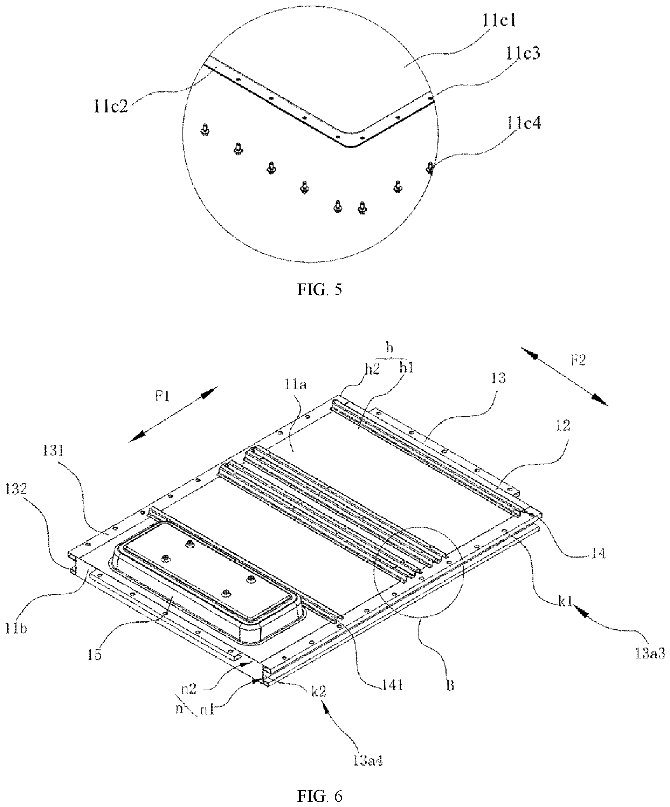

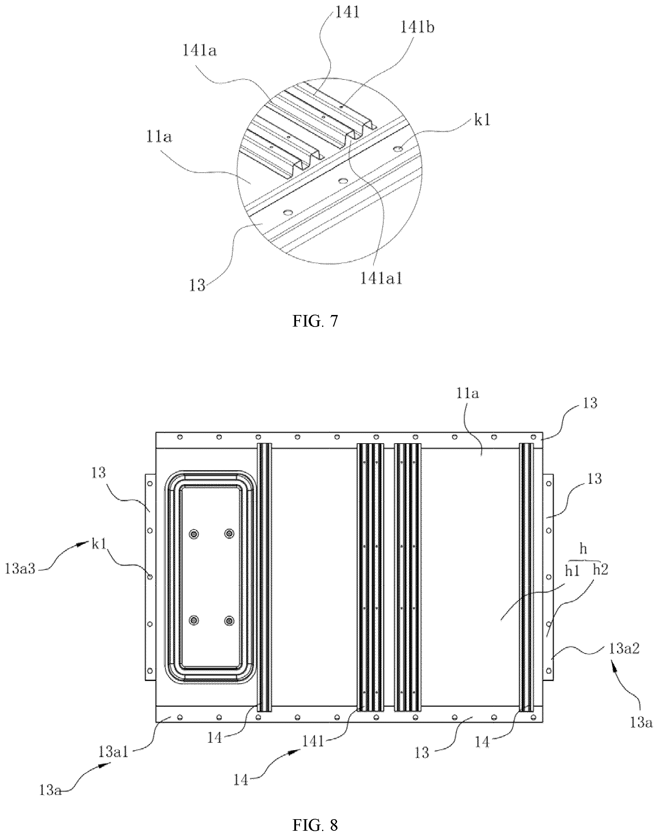

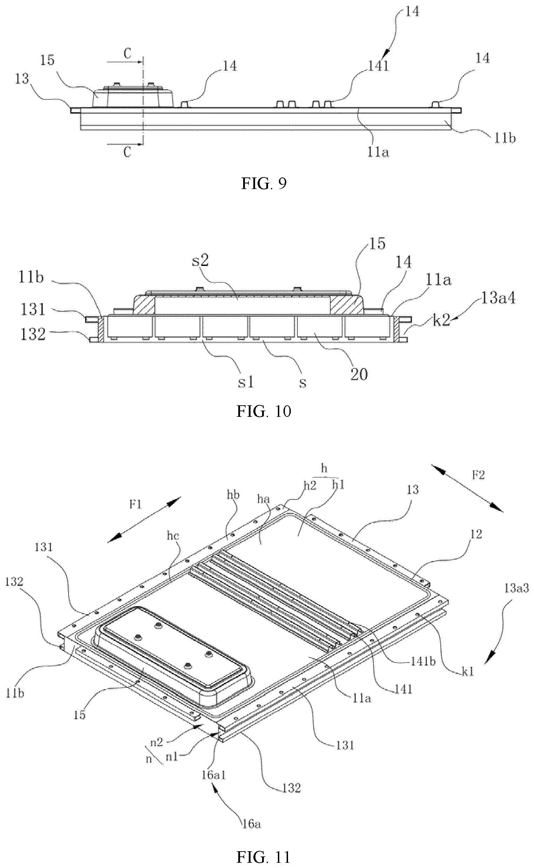

Fig. 4 is another structural exploded view of a battery 100 according to some embodiments of the present application. Fig. 5 is an enlarged view of part A in Fig. 4. Fig. 6 is a partial schematic structural view of a battery 100 according to some embodiments of the present application. Fig. 7 is an enlarged view of part B of the structure shown in Fig. 6, Fig. 8 is a top view of the structure shown in Fig. 6, Fig. 9 is a side view of the structure shown in Fig. 6, and Fig. 10 is a cross-sectional view taken through C-C of the structure shown in Fig. 9.

In some embodiments, referring to Fig. 4, the battery 100 is mounted to an external device via the top portion of the box 10.

The top portion of the box 10 includes a top surface h of the box 10, and other structures arranged on the top surface h of the box 10. The top surface h of the box 10 refers to an upper side surface of the box 10 in a vertical direction when in use. The other structures arranged on the top surface h of the box 10 include but are not limited to a connector (such as a bolt and a rivet) for connecting the top surface h of the box 10 to the external devices, and a sealing structure (such as a sealing strip) for sealing the box 10 against the external device.

The external device refers to a device for mounting the box 10. The external device may be a partial structure of the electrical apparatus for mounting the box 10 as mentioned above, or may be the remaining structure of the electrical apparatus that forms the electrical apparatus together with the battery 100. Taking the electrical apparatus defined as a vehicle 1000 as an example, the external device may be a vehicle body 200 of the vehicle 1000, and the battery 100 may be mounted to a bottom portion of the vehicle body 200, and mounted to the vehicle body 200 via its top portion.

In this case, the battery 100 is mounted to the external device via the top portion of the box 10. Corresponding to the arrangement in which the box 10 is located at the bottom portion of the external device, the connection structure between the box 10 and the external device is smaller in size, lower in cost and more compact.

Of course, in other embodiments, the battery 100 may alternatively be mounted to the external device via the bottom portion, a side portion, etc. of the box 10.

In some embodiments, referring to Fig. 4, the box 10 includes a main body 11, and the main body 11 encloses an accommodating cavity s.

The main body 11 may be an integrally formed structure, or may be formed by assembling a plurality of parts. It can be understood that the main body 11 is a hollow shell-like structure, which itself encloses the accommodating cavity s. Specifically, without limitation, the main body 11 may be formed by assembling a first sub-portion (not shown) and a second sub-portion (not shown). In one example, the first sub-portion encloses an accommodating cavity s having an opening at one end, and the second sub-portion covers the opening of the accommodating cavity s. In another example, the first sub-portion encloses a first space having an opening at one end, and the second sub-portion encloses a second space having an opening at one end, and the two openings of the first sub-portion and the second sub-portion are covered by each other to form an accommodating cavity s composed of the first space and the second space. The first sub-portion may be connected to the second sub-portion by welding, snap-fit, fastening, etc. The first sub-portion and the second sub-portion may be made of plastic, metal or other materials.

In some embodiments, referring to Fig. 4, a top portion of the main body 11 forms at least part of the top portion of the box 10.

The top portion of the main body 11 refers to the structure located at the uppermost position of the main body 11 in the vertical direction. The uppermost position of the main body 11 is the uppermost position of the box 10, so that the top portion of the main body 11 forms at least part of the top portion of the box 10. When the top portion of the main body 11 forms the entire top portion of the box 10, the top portion of the main body 11 is then the top portion of the box 10, and the entire top portion of the box 10 participates in the definition of the accommodating cavity s. When the top portion of the main body 11 forms part of the top portion of the box 10, the top portion of the box 10 also has other structures that do not participate in the definition of the accommodating cavity s, such as a lateral beam 13 described below, see below for details.

When the battery 100 is mounted to the external device via the top portion of the box 10, the top portion of the main body 11 is also located in the battery 100 at a position closest to the external device. The distance between the top portion of the main body 11 and the external device refers to the distance between the highest point of the top portion of the main body 11 and the external device located above the main body in the vertical direction.

It can be understood that, referring to Fig. 6, the main body 11 has a peripheral side wall n arranged around an outer edge of its top portion.

The main body 11 has a top portion at the uppermost position in the vertical direction, and naturally also has a bottom portion at the lowermost position. The bottom portion may be a bottom surface and a structure arranged on the bottom surface, or the bottom portion may be open.

An outer surface, which faces away from the accommodating cavity s, of a structure clamped between the top portion and the bottom portion forms a peripheral side wall n, and an extending direction of the plane where the peripheral side wall n is located intersects with the plane where the top portion is located. The peripheral side wall n may be in the shape of a ring, a quadrilateral, etc., formed by connecting a plurality of wall sections end to end, see below for details.

It can be understood that, referring to Fig. 6, the box 10 further has a top surface h facing away from the accommodating cavity s.

The top surface h of the box 10 is a surface located on a side of the top portion of the box 10 facing away from the accommodating cavity s. When the battery 100 is assembled to the external device via the top portion of the box 10, the top surface h is arranged to face the external device and forms the position of the battery 100 closest to the external device.

In some embodiments, referring to Fig. 6, the top surface h of the box 10 is configured to be in contact with an external device (not shown) to which the battery 100 is mounted.

The battery 100 is mounted to the external device via the top portion of the box 10, and the surface of the box 10 on the side facing away from the accommodating cavity s is in contact with and attached to the external device, so that the battery 100 is closely connected to the external device. Corresponding to the arrangement in which the top surface h of the box 10 is not in contact with the external device, the connection structure between the box 10 and the external device is smaller in size, lower in cost and more compact.

In some embodiments, referring to Fig. 6, the top portion of the box 10 is configured with a hanging portion 13a3, and the battery 100 is mounted to the external device via the hanging portion 13a3.

As a part of the top portion of the box 10, the hanging portion 13a3 does not participate in the definition of the accommodating cavity s. The hanging portion 13a3 refers to a special structure provided on the top portion of the box 10 and configured to be connected to a connector (such as a bolt and a rivet) of the external device. The connector may have one end connected to the hanging portion 13a3, and the other end connected to the external device, so as to fixedly connect the battery 100 to the external device. It can be understood that, the top portion of the main body 11 is used as at least part of the top portion of the box 10, and the hanging portion 13a3 may be arranged on the top portion of the main body 11, or on other structures forming the top portion of the box 10 (such as the lateral beam 13 mentioned below) in other configurations.

When the battery 100 is mounted to the external device via the hanging portion 13a3, the top surface h of the box 10 is now in contact with the external device. The connection strength is increased, and a compact connection structure between the box 10 and the external device can also be ensured.

It is also possible that the hanging portion 13a3 itself has a connection function (such as a hoisting ring), and a corresponding connector (such as a hook) is provided on the external device and directly connected to the hanging portion 13a3. In other embodiments, it is also possible that no connector is provided, and the connection between the hanging portion 13a3 and the external device is directly realized by other means, including but not limited to snap-fit, insertion, screw connection, riveting, welding, bonding, etc., which will not be specifically limited in the present application.

In some embodiments, referring to Fig. 6, the hanging portion 13a3 includes at least one hanging hole k1 provided in the top portion of the box 10.

As a part of the top portion of the box 10, the hanging portion 13a3 does not participate in the definition of the accommodating cavity s. The hanging portion 13a3 refers to a special structure provided on the top portion of the box 10 and configured to be connected to a connector (such as a bolt and a rivet) of the external device. The connector may have one end connected to the hanging portion 13a3, and the other end connected to the external device, so as to fixedly connect the battery 100 to the external setting. It can be understood that, the top portion of the main body 11 is used as at least part of the top portion of the box 10, and the hanging portion 13a3 may be arranged on the top portion of the main body 11, or on other structures forming the top portion of the box 10 (such as the lateral beam 13 mentioned below) in other configurations.

When the battery 100 is mounted to the external device via the hanging portion 13a3, the top surface h of the box 10 is now in contact with the external device. The connection strength is increased, and a compact connection structure between the box 10 and the external device can also be ensured.

It is also possible that the hanging portion 13a3 itself has a connection function (such as a hoisting ring), and a corresponding connector (such as a hook) is provided on the external device and directly connected to the hanging portion 13a3. In other embodiments, it is also possible that no connector is provided, and the connection between the hanging portion 13a3 and the external device is directly realized by other means, including but not limited to snap-fit, insertion, screw connection, riveting, welding, bonding, etc., which will not be specifically limited in the present application.

In some embodiments, referring to Fig. 6, the hanging portion 13a3 includes at least one hanging hole k1 provided in the top portion of the box 10.

The hanging holes k1 may be formed in the top portion of the box 10 by drilling, the hanging holes k1 each are internally provided with an aperture and openings in communication with two ends of the aperture. The aperture and the openings in communication with the two ends of the aperture allow the connector to pass through and be fixed to the structure provided with the hanging hole k1, so that the external device is connected to the top portion of the box 10 via the connector.

The connector may be configured as a rivet, and a fixing hole 11c3 is provided in the external device at a position corresponding to the hanging hole k1. After the rivet passes through the fixing hole 11c3 and the hanging hole k1, the two are fixed by means of a nut. It is also possible that the connector is configured as a screw, the hanging hole k1 is configured as a threaded hole, and the screw passes through the hanging hole k1 and is connected to the box 10 by means of threaded connection.

Specifically, all the hanging holes k1 may be configured to extend in the vertical direction, so as to fix the battery 100 to the bottom portion of the external device in the vertical direction. It can be understood that, in order to realize the stability of the connection between the top portion of the box 10 and the external device and the uniformity of force on both, the position, distance and other factors of all the hanging holes k1 can be controlled, see below for details.

It can be understood that, in addition to including the hanging hole k1, the hanging portion 13a3 may further include other structures capable of hanging, such as hooks.

In some embodiments, referring to Figs. 4 and 6, the main body 11 includes a carrier 11a and a border 11b. The border 11b encloses a cavity with at least its top end being provided in a penetrating manner, and the carrier 11a covers the top end of the cavity, and the carrier 11a and the border 11b enclose at least part of the accommodating cavity s.

The border 11b itself encloses at least a cavity with at least its top end being provided in a penetrating manner, and the carrier 11a covers a top portion of the cavity, that is, the carrier 11a is located at the top portion of the box 10 and is used to define the accommodating cavity s. The border 11b and the carrier 11a may be made of the same material, such as an aluminum alloy, a copper alloy, steel, and plastic. Of course, the border 11b, the carrier 11a and the bottom cover 11c may alternatively be made of different materials, which will not be specifically limited. In terms of the orthographic projection in the vertical direction, the border 11b may be in the shape of a rectangle, a circle, a polygon, etc., which will not be specifically limited. The carrier 11a may be a carrying plate, a carrying sheet, a carrying block and other structures.

The top surface h1 of the main body 11 may be entirely formed by a top surface of the carrier 11a, and the border 11b is entirely located below the carrier 11a in this case. The top surface h1 of the main body 11 may alternatively be formed jointly by the top surface of the carrier 11a and a top surface of the border 11b. In this case, the carrier 11a is located inside the border 11b, and the top surface of the carrier 11a and the top surface of the border 11b may be coplanar or non-coplanar.

The carrier 11a is fixedly connected to or integrally formed with the border 11b. The carrier 11a is integrally formed with the border 11b by means of injection molding, die-casting, forging, cold pressing, hot pressing, etc. The carrier 11a may be fixedly connected to the border 11b by means of fastening connection via a fasteners, snap-fitting via a snap-fit structure, welding, bonding, hot-melt connection, etc.

The peripheral side wall n of the main body 11 is mainly formed by the peripheral side wall n of the border 11b. The peripheral side wall n of the border 11b is an outer surface arranged around the carrier 11a and facing away from the cavity defined by itself.

In some embodiments, referring to Figs. 4 and 5, the main body 11 further includes a bottom cover 11c. The bottom cover 11c forms the accommodating cavity s for accommodating the battery cell 20 together with the carrier 11a and the border 11b.

It can be understood that, the cavity of the border 11b also runs through the bottom portion of the border 1 1b, and the bottom cover 11c covers the bottom portion of the border 1 1b, and forms the accommodating cavity s of the box 10 together with the border 11b and the carrier 11a.

Specifically, the bottom cover 11c may be, but not limited to, a plate-shaped structure, a block-shaped structure, etc., or may be in the shape of a flat plate, a bent plate, etc., which will not be specifically limited. When the battery cell 20 is located in the accommodating cavity s, the battery cell 20 may be arranged on the bottom cover 11c and/or the carrier 11a and/or the border 11b.

The bottom cover 11c and the border 11b may be fixed to each other by means of welding, hot-melt connection, bonding, fastening connection, snap-fitting, etc. The fastening connection refers to a connection realized by means of a fixing member 11c4. The fixing member 11c4 includes a bolt, a pin, a rivet, a dowel, a screw and other members. The snap-fitting refers to a fixation realized by means of a snap-fit structure. For example, the bottom cover 11c is provided with a snap hook, and the border 11b is provided with a snap opening. When the snap hook is snap-fitted in the snap opening, the bottom cover 11c can be snap-fitted with and fixed to the border 11b. Of course, the connection between the bottom cover 11c and the border 11b is not limited thereto, and will not be exhaustive in the present application.

In this case, on the basis of the border 11b, the accommodating cavity s of the battery 100 can be formed by connecting the carrier 11a and the bottom cover 11c to two vertical ends of the border 11b, and the structure of the main body 11 is relatively simple.

In some embodiments, referring to Figs. 4 and 5, the bottom cover 11c is provided with a cover portion 11c1 and a mounting portion 11c2. The mounting portion 11c2 surrounds and is connected to an edge of the cover portion 11c1, the cover portion 11c1 is configured to define the accommodating cavity s, and the mounting portion 11c2 is connected to the border 11b.

By the cover portion 11c1 being configured to define the accommodating cavity s, it is meant that the cover portion 11c1, the carrier 11a, and the border 11b together enclose the accommodating cavity s, and the mounting portion 11c2 is connected to the border 11b without participating in the definition of the accommodating cavity s. The cover portion 11c1 may be a plate-shaped member or a block-shaped member, or may be a flat-plate-shaped or bent-plate-shaped member, which will not be specifically limited. It can be seen from Figs. 4 and 5 that, by the mounting portion 11c2 surrounding the edge of the cover portion 11c1, it is meant that the mounting portion 11c2 is arranged continuously along the edge of the cover portion 11c1 to form an end-to-end closed structure. It can be understood that, in terms of the projection in the vertical direction, the mounting portion 11c2 has a width, and thus can have an appropriate contact area with the border 11b, so as to facilitate the positioning and mounting between the mounting portion 11c2 and the border 11b.

The cover portion 11c1 may be integrally formed with the mounting portion 11c2. When the bottom cover 11c is made of metal (such as aluminum, iron, or stainless steel), the cover portion 11c1 may be integrally formed with the mounting portion 11c2 by die-casting, forging, hot pressing, cold pressing, etc. When the bottom cover 11c is made of a plastic material (such as polypropylene, polyethylene, or acrylonitrile butadiene styrene plastic (ABS)), the cover portion 11c1 may be integrally formed with the mounting portion 11c2 by injection molding. The cover portion 11c1 and the mounting portion 11c2 may alternatively be formed separately and then connected together. When the cover portion 11c1 and the mounting portion 11c2 are made of metal, the cover portion 11c1 and the mounting portion 11c2 may be welded or bonded together. When the cover portion 11c1 and the mounting portion 11c2 are made of a plastic material, the cover portion 11c1 and the mounting portion 11c2 may be bonded together. Of course, the cover portion 11c1 and the mounting portion 11c2 may alternatively be fixedly connected together by snap-fitting, riveting or other means.

The cover portion 11c1 and the mounting portion 11c2 may be located in the same plane. Specifically, optionally, two surfaces of the cover portion 11c1 and the mounting portion 1 1c2 that face the carrier 11a are located in the same plane, and/or two surfaces of the cover portion 11c1 and the mounting portion 11c2 that face away from the carrier 11a are located in the same plane. When the two surfaces of the cover portion 11c1 and the mounting portion 11c2 that face the carrier 11a are located in the same plane and the two surfaces facing away from the carrier 11a are located in the same plane, the cover portion 11c1 and the mounting portion 11c2 may form a flat plate-shaped bottom cover 11c.

The cover portion 11c1 and the mounting portion 11c2 may alternatively be not located in the same plane. Specifically, the cover portion 11c1 is recessed toward the carrier 11a relative to the mounting portion 11c2, or the cover portion 11c1 protrudes away from the carrier 11a relative to the mounting portion 11c2, which will not be specifically limited. The thicknesses of the cover portion 11c1 and the mounting portion 11c2 may be equal or different, which will not be specifically limited.

In this case, the bottom cover 11c defines the accommodating cavity s by means of the cover portion 11c1, and is connected to the border 11b via the mounting portion 11c2, so that a distinct structure and convenient mounting are realized.

It can be understood that, when the bottom cover 11c is detachably connected to the border 11b, the bottom cover 11c is detachably connected to the border 11b via the mounting portion 11c2, that is, the mounting portion 11c2 is detachably connected to the border 11b. For the detachable connection between the mounting portion 11c2 and the border 1 1b, it is only necessary to configure the portion of the bottom cover 11c that is detachably connected to the border 1 1b as the mounting portion 11c2.

In some embodiments, the mounting portion 11c2 is detachably connected to the border 11b.

Specifically, the bottom cover 11c further includes a fixing hole 11c3 provided in the mounting portion 11c2, and the fixing member 11c4 passes through the fixing hole 11c3 of the mounting portion 11c2 and is then fastened to the border 11b. The fixing hole 11c3 is a through hole penetrating the mounting portion 11c2 in the vertical direction. Specifically, the fixing hole 11c3 may be a smooth through hole (for example, when the fixing member 11c4 is a rivet), or a threaded through hole (for example, when the fixing member 11c4 is a screw), or other through holes (such as hexagonal holes, square holes, or waist holes). The specific form of the fixing hole 11c3 depends on the specific form and the specific arrangement of the fixing member 11c4, and will not be described in details here.

In some embodiments, referring to Figs. 6, 8 and 9, the box 10 includes a lateral beam 13. The lateral beam 13 is arranged on the peripheral side wall n of the main body 11.

The lateral beam 13 refers to a beam structure arranged on the peripheral side wall n of the main body 11 to enhance the strength of the main body 11. It can be understood that, the lateral beam 13 is located outside the main body 11. Specifically, the main body 11 and the lateral beam 13 are integrally connected into a whole, and may also be connected into a whole by assembling. The way of integral connection includes, but is not limited to, welding, integral forming, and welding. The way of assembled connection includes, but is not limited to, snap-fitting and fastening.

The lateral beam 13 may be arranged on the whole of the peripheral side wall n of the main body 11, or only on a part of the peripheral side wall n of the main body 11. Without limitation, the lateral beam 13 is arranged around the peripheral side wall n of the main body 11, so that the strength of the main body 11 can be enhanced from multiple lateral directions of the main body 11. Specifically, the lateral beam 13 is arranged continuously or intermittently around the peripheral side wall n of the main body 11. The lateral beam 13 may be a ring-shaped beam when arranged continuously, and the lateral beam 13 may include a plurality of beam parts arranged spaced apart from each other around the peripheral side wall n of the main body 11 when arranged intermittently.

In an actual application scenario, the box 10 is applied to a battery 100 and the battery 100 is applied to a vehicle 1000, a top portion of the box 10 is mounted to the vehicle 1000, and the top portion of the box 10 forms a chassis structure of the vehicle 1000. When the box 10 of the battery 100 is used as the chassis of the vehicle 1000, the lateral structure of the box 10 is vulnerable to external impacts (such as a lateral position of the box 10 being hit by flying stones during traveling of the vehicle 1000, or a lateral position being hit by other vehicles 1000) and is thus squeezed. In this case, a lateral beam 13 is provided on a lateral peripheral wall of the main body 11, and the lateral structural strength of the main body 11 can be enhanced by the lateral beam 13, thereby improving the lateral squeezing resistance of the box 10, and also improving the lateral squeezing resistance of the vehicle 1000 and the safety of vehicles 1000.

It can be understood that, when the main body 11 includes the carrier 11a and the border 11b as described above, the lateral beam 13 is arranged on the peripheral side wall n defined by the border 11b.

The cavity formed by the border 11b mainly constitutes the accommodating cavity s of the box 10. Since the accommodating cavity s has a certain height to accommodate a plurality of battery cells 20, the border 11b also has a certain height, so the peripheral side wall n of the border 11b has a relatively large area. In this case, the lateral beam 13 is arranged on the peripheral side wall n defined by the border 11b, and the mounting method, the mounting area and the arrangement of the lateral beam 13 are more flexible.

Further to the embodiment, the lateral beam 13 is fixedly connected to or integrally formed with the border 11b. The lateral beam 13 and the border 11b may be fixedly connected to each other by welding, soldering, riveting, threaded connection, etc., or may be formed as a whole by integral processing (such as stamping, or die-casting).

When the lateral beam 13 is integrally formed with the border 1 1b, the number of procedures of assembling the box 10 can be reduced, and the production process of the box 10 can be accelerated. When the lateral beam 13 is fixedly connected to the border 11b, the forming process of the lateral beam 13 and the border 11b is relatively easy, and the process cost of the box 10 can be reduced.

In some embodiments, referring to Fig. 10, the lateral beam 13 includes at least two sub-beams 13a. The sub-beams 13a are sequentially arranged spaced apart from each other along the peripheral side wall n. The sub-beam 13a is the basic unit of the lateral beam 13, and the position of the lateral beam 13 can be flexibly arranged on the peripheral side wall n of the main body 11 by setting the position of the sub-beam 13a.

The lateral beam 13 is formed by at least two sub-beams 13a arranged spaced apart from each other along the peripheral side wall n of the main body 11, which means that at least two sub-beams 13a are arranged spaced apart from each other along the extending direction of the peripheral side wall n to form an enclosure form around the main body 11, to enhance the strength of the main body 11 from multiple lateral directions of the main body 11.

There are various structural forms of the sub-beams 13a, and the structures of the sub-beams 13a may be the same or different. As an example, the sub-beam 13a is a solid beam extending lengthwise. As another example, the sub-beam 13a is a hollow beam extending lengthwise. The cross-sectional shapes of the sub-beams 13a may be H-shaped, U-shaped or other structural forms.

In this case, the lateral beam 13 is formed by a combination of multiple sub-beams 13a, and the arrangement of the lateral beam 13 is more flexible. Moreover, the sub-beams 13a can be mounted one by one during mounting. Compared with the integral lateral beam 13, the positioning during the mounting is more convenient and labor-saving.

**In** some embodiments, still referring to Fig. 10, at least one sub-beam 13a includes an upper arm beam 131 and a lower arm beam 132. The upper arm beam 131 and the lower arm beam 132 are arranged spaced apart from each other in the vertical direction, and are both connected to the main body 11.

The vertical direction corresponds to the direction in which the top and bottom portions of the main body 11 are located, that is, the upper arm beam 131 is close to the top portion of the main body 11, and the lower arm beam 132 is close to the bottom portion of the main body 11. It can be understood that, both the upper arm beam 131 and the lower arm beam 132 extend in a peripheral direction of the main body 11 and are attached to the peripheral side wall n of the main body 11. The upper arm beam 131 and the lower arm beam 132 are arranged spaced apart from each other, and are connected to each other via the main body 11. A duct may be formed in the middle of the interval between the upper arm beam and the lower arm beam. The duct can be used as both a structure for reducing weight and a structure for routing a wire harness.

In this case, the structure of the main body 11 is enhanced by the upper arm beam 131 and the lower arm beam 132. Since the upper arm beam 131 and the lower arm beam 132 are arranged separately, the impact force received by the box 10 can be dispersed, so that the box 10 is subjected to relatively uniform external forces everywhere. Moreover, the upper arm beam 131 and the lower arm beam 132 are arranged spaced apart from each other in the vertical direction, so that the sub-beams 13a can withstand the squeezing of the vehicle 1000 in the front and rear directions or in the left and right directions, and are more suitable for the actual use conditions of the vehicle 1000. In addition, the arrangement of the upper arm beam 131 and the lower arm beam 132 spaced apart from each other can reduce the weight of the box 10 and realize other functions.

In other embodiments, an intermediate beam (not shown) may be further provided between the upper arm beam 131 and the lower arm beam 132. The intermediate beam is connected between the upper arm beam 131 and the lower arm beam 132, so that the structural strength of the sub-beams 13a can be further increased, and the lateral squeezing resistance of the box 10 is improved.

In some embodiments, at least one of the upper arm beam 131 and the lower arm beam 132 is a hollow beam. By hollow beam means that the inside of the beam is a hollow structure, that is, there is a space inside the beam that is not filled with any solid substance. In this case, the upper arm beam 131 and the lower arm beam 132 are hollow beam structures, which can not only reduce their own weight, but can also alleviate the problem of high energy consumption caused by the heavy weight of the battery 100 itself when the battery 100 formed by the box 10 is applied to an electrical apparatus such as a vehicle 1000. Moreover, the hollow beam structure can dissipate the lateral squeezing force through its inner space, and reduce the damage degree of the battery 100 when subjected to lateral squeezing.

In some embodiments, referring to Fig. 6, the peripheral side wall n includes at least two first wall sections n1 which extend in a first direction F1 and are spaced apart from each other; and the at least two sub-beams 13a include two first sub-beams 13a1. The two first sub-beams 13a1 are respectively arranged at the two first wall sections n 1, and both extend in the first direction F1.

In a practical application, when the battery 100 formed by the box 10 is applied to the vehicle 1000 and the top portion of the box 10 forms the chassis of the vehicle 1000, the first direction F1 may correspond to the front and rear directions of the vehicle 1000. The first wall section n1 of the peripheral side wall n of the main body 11 corresponds to the peripheral side wall n of the battery 100 in both left and right directions. The first wall sections n1 extend in the first direction F1, that is, in the front and rear directions of the vehicle 1000. The two first wall sections n1 are arranged spaced apart from each other in the left and right directions of the vehicle 1000. The sub-beams 13a are arranged on the two first wall sections n1, and each sub-beam 13a has the same extending direction as the respective first wall section n1.

The structures of the sub-beams 13a on the first wall sections n1 may be the same, so that the consistent squeezing resistance of the left and right sides of the vehicle 1000 can be ensured. Further, the sub-beam 13a on the first wall section n1 includes the upper arm beam 131 and the lower arm beam 132 mentioned in the above embodiments. In this case, the strong squeezing resistance of the sub-beam 13a can make up for the weak structure of the vehicle 1000 on the left and right sides, strengthen the squeezing resistance of the vehicle 1000 on the left and right sides, and improve the safety of the vehicle 1000.

In this case, the sub-beams 13a arranged on the first wall sections n1 can enhance the structural strength of the first wall sections n1 and improve the squeezing resistance of the first wall sections n1. That is, the squeezing resistance of the vehicle 1000 on the left and right sides is improved. It can be understood that, since the sub-beams 13a extend in the first direction F1, they can also improve the bending resistance of the vehicle 1000 in the front and rear directions.

In some embodiments, still referring to Fig. 6, the peripheral side wall n further includes two second wall sections n2 extending in a second direction F2 perpendicular to the first direction F1 and spaced apart from each other. The two first wall sections n1 and the two second wall sections n2 are connected alternately to each other. The at least two sub-beams 13a further include two second sub-beams 13a2, and the two second sub-beams 13a2 are respectively arranged on the two second wall sections n2, and both extend in the first direction F1.

In a practical application, the second direction F2 may correspond to the left and right directions of the box 10. In this case, the second wall section n2 corresponds to the peripheral side wall n of the battery 100 in both front and rear directions. The second wall sections n2 extend in the second direction F2, that is, in the left and right directions of the vehicle 1000.

The structures of the sub-beams 13a on the second wall sections n2 may be the same, so that the consistent squeezing resistance of the front and rear sides can be ensured. Further, the sub-beam 13a on the first wall section n1 may only include the upper arm beam 131 mentioned in the above embodiments, and the upper arm beam 131 is arranged close to the top portion of the main body 11. In this case, the squeezing resistance of the sub-beam 13a is weak, mainly because anti-squeezing structures such as bumpers are generally provided in the front and rear directions of the vehicle 1000. When the vehicle 1000 is squeezed in the front and rear directions, the anti-squeezing effect is mainly realized by the front and rear bumpers. In this case, the sub-beam 13a of the second wall section n2 has relatively weak squeezing resistance requirements, and a relatively simple structure of the sub-beam 13a can thus be used, so that the cost of the battery 100 and the cost of the vehicle 1000 can be reduced.

In this case, the sub-beams 13a arranged on the second wall sections n2 can enhance the structural strength of the second wall sections n2 and improve the squeezing resistance of the second wall sections n2. That is, the squeezing resistance of the vehicle 1000 on the left and right sides is improved. It can be understood that, since the sub-beams 13a extend in the second direction F2, they can also improve the bending resistance of the vehicle 1000 in the left and right directions.

In some embodiments, still referring to Fig. 6, the lateral beam 13 includes at least two first sub-beams 13a1 and at least two second sub-beams 13a2 both arranged on the peripheral side wall n. The first sub-beams 13a1 extend in a first direction F1 and are spaced apart from each other, and the second sub-beams 13a2 extend in a second direction F2 intersecting with the first direction F1 and are spaced apart from each other.

In this case, the sub-beam 13a arranged on the first wall section n1 is the first sub-beam 13a1, and the sub-beam 13a arranged on the second wall section n2 is the second sub-beam 13a2. The two first sub-beams 13a1 can enhance the squeezing resistance of the box 10 in the left and right directions of the vehicle 1000, and the two second sub-beams 13a2 can enhance the squeezing resistance of the box 10 in the front and rear directions of the vehicle 1000, so that the lateral squeezing resistance of the vehicle 1000 can be comprehensively improved, and the safety performance of the vehicle 1000 can be improved.

In some embodiments, still referring to Fig. 6, the top portion of the lateral beam 13 is configured with a hanging portion 13a3.

For the introduction of the hanging portion 13a3, reference may be made to what has been described above, and details are not repeated here. In this case, the hanging portion 13a3 is arranged at the top portion of the lateral beam 13, and the box 10 of the embodiments of the present application can be obtained by adding the lateral beam 13 on the basis of the structure of the existing box 10. In this way, the modification cost can be greatly reduced. Moreover, the hanging portion 13a3 is arranged on the lateral beam 13. Since the lateral beam 13 does not need to define the accommodating cavity s, the influence of the hanging portion 13a3 on the sealing performance of the accommodating cavity s does not need to be considered when the hanging portion 13a3 is provided. The arrangement of the hanging portion 13a3 is more flexible. Moreover, the lateral beam 13 is located at a lateral edge of the box 10. In this case, the hanging portion 13a3 is arranged at the lateral beam 13, so that the operation space is larger and the operation is more convenient when the box 10 is mounted to the external device.

In some embodiments, the hanging portion 13a3 includes at least one hanging hole k1 provided in the top portion of the lateral beam 13.

For the introduction of the hanging hole k1, reference may be made to what has been described above, and details are not repeated here. The hanging hole k1 is provided in the top portion of the lateral beam 13 and also has the beneficial effect of the hanging portion 13a3 being arranged at the top portion of the lateral beam 13, which will not be repeated here.

In some embodiments, the top surface h1 of the main body 11 and a top surface h2 of the lateral beam 13 jointly define the top surface h of the box 10.

The top surface h1 of the main body 11 refers to an outer surface of the main body 11 that is located at its top portion and on the side facing away from the accommodating cavity s, and the top surface h2 of the lateral beam 13 refers to an outer surface of the lateral beam 13 that is located at its top portion. When the lateral beam 13 includes the upper arm beam 131 and the lower arm beam 132 described in the above embodiments, the top surface h2 of the lateral beam 13 refers to an outer surface of the upper arm beam 131 on the side facing away from the lower arm beam 132.

When the box 10 includes both the main body 11 and the lateral beam 13 in the above embodiments, the top surface h of the box 10 may be defined jointly by the top surface h1 of the main body 11 and the top surface h2 of the lateral beam 13. The top surface h1 of the main body 11 and the top surface h2 of the lateral beam 13 may be coplanar. In this case, the contact area between the top surface h of the box 10 and the external device is relatively large, facilitating the improvement of the connection reliability between the box 10 and the external device. Moreover, the top portion of the box 10 has a relatively flat structure and is more attractive. Of course, the top surface h1 of the main body 11 and the top surface h2 of the lateral beam 13 may alternatively be non-coplanar.

It can be understood that, when the lateral beam 13 includes at least two sub-beams 13a, the top surface of each sub-beam 13a defines a part of the top surface h2 of the lateral beam 13, and the sub-beam 13a is provided with a hanging portion 13a3. It is possible that some of the sub-beams 13a are provided with hanging portions 13a3, or that all of the sub-beams 13a are provided with hanging portion 13a3. When some of the sub-beams 13a are provided with hanging portions 13a3, to ensure the uniformity of force on the hanging portions 13a3, the symmetrically arranged sub-beams 13a are all provided with hanging portions 13a3. The symmetrically arranged sub-beams 13a include the two first sub-beams 13a1 in the above embodiments, and may also include the two second sub-beams 13a2 in the above embodiments.

In some embodiments, referring to Figs. 6 and 10, an outer wall of the box 10 is configured with a wiring portion 13a4. The wiring portion 13a4 is located below the top surface h of the box 10, and is provided with a wiring space for allowing a wire harness to pass through.

The outer wall of the box 10 is an outer surface opposite to an inner surface of the box 10 that defines the accommodating cavity s. The wiring portion 13a4 is located below the top surface of the box 10, that is, the wiring portion 13a4 is arranged on the outer wall of the box 10 below the top surface h. The outer wall of the box 10 below the top surface h includes a bottom surface and a side wall connected to the top surface h and the bottom surface.

When the box 10 includes only the main body 11, the side wall of the box 10 is the peripheral side wall n of the main body 11. When the box 10 includes the main body 11 and the lateral beam 13, the side wall of the box 10 includes the peripheral side wall n of the main body 11 that is not covered by the lateral beam 13, and a surface of the lateral beam 13 that faces away from the main body 11.

The wiring portion 13a4 is located outside the accommodating cavity s, and has a wiring space for allowing for the passage of the wire harness electrically connected between the battery cell and an electrical component. The specific form of the wiring space is not limited, as long as there is a wire inlet for the wire harness to enter and a wire outlet for the wire harness to exit. The wire inlet and the wire outlet may be the same opening. The wiring space may be a wiring hole or a wiring groove k2.

Specifically, a wiring portion 13a4 is provided on the peripheral outer wall of the box 10. In this case, the wire harness may be routed by means of a side surface of the box 10, and the routing is more convenient. Specifically, it is also possible that a wiring portion 13a4 is provided on the bottom surface of the box 10. In this case, the wire harness may be wired by means of the bottom portion of the box 10.

In this case, by forming the wiring portion 13a4 on the outer wall of the box 10, the wiring space formed by the wiring portion 13a4 allows for the wiring of the wire harness, so that the wire harness can be effectively protected, to prevent the wire harness from being squeezed and deformed when the vehicle 1000 is squeezed from the outside, causing unnecessary safety hazards.

In a further embodiment, still referring to Figs. 6 and 10, the wiring portion 13a4 is arranged on a side wall of the box 10 that is adjacent to the top surface h thereof.

The side wall is an outer surface of the box 10 connected to its own top surface h and bottom surface (the side surface opposite to the top surface h). The wiring portion 13a4 may be provided on only some of the side walls of the box 10, for example, on one or two side walls of the box 10 in the first direction F1, or on one or two side walls of the box 10 in the second direction F2. Of course, the wiring portion 13a4 may alternatively be provided on all the side walls of the box 10.

In this case, the wiring portion 13a4 is arranged on the side walls of the box 10, and it is more convenient to arrange the wire harness because of a large lateral operating space of the box 10.

In some embodiments, wiring portions 13a4 are arranged on two side walls of the box 10 that are both adjacent to the top surface h and are opposite to each other.

The two side walls of the box 10 that are both adjacent to the top surface h and are opposite to each other include two side walls opposite to each other in the first direction F1, or two side walls opposite to each other in the second direction F2. In this case, the wiring portions 13a4 may be symmetrically arranged opposite to each other in the first direction F1 or arranged opposite to each other in the second direction F2, and the wire harness may be wired from two sides of the box 10 in the first direction F1 at the same time, or from two sides of the box 10 in the second direction F2 at the same time, so that the symmetrical arrangement of the wire harness can be realized, making the arrangement of the wire harness more attractive, and also contributing to the balance of the weight of the vehicle 1000.

Further, the wiring portions 13a4 are provided on two side walls of the box 10 in the second direction F2, that is, arranged on two side walls of the box 10 corresponding to the left and right directions of the vehicle 1000. Since the various electric driving systems (for providing driving force for the vehicle 1000 to move forward) on the vehicle 1000 are mainly arranged on the front or rear side, the wire harness is connected to the battery 100 and the electric driving systems mainly in the front and rear directions of the vehicle 1000. Such an arrangement of the wiring portions 13a4 makes the wiring of the wire harness more convenient.

In a specific embodiment, referring to Figs. 6 and 10, the wiring portion 13a4 includes a wiring groove k2 formed on the outer wall of the box 10 and recessed toward the accommodating cavity s.

It can be understood that, the wiring groove k2 is recessed toward the accommodating cavity s to form a wiring space having an opening on one side, and the opening is opposite to the groove bottom of the wiring groove k2. While the wiring groove k2 is recessed toward the accommodating cavity s, it may also be provided with a wire inlet and a wire outlet. Specifically, the wire inlet of the wiring groove k2 may be an opening at one end in the extending direction of the wiring groove k2, and the wire outlet of the wiring groove k2 may be an opening at the other end in the extending direction of the wiring groove k2.

When the wiring groove k2 is located on the side wall of the box 10 in the second direction F2, the wiring groove k2 may extend in the first direction F1. When the wiring groove k2 is located on the side wall of the box 10 in the first direction F1, the wiring groove k2 may extend in the second direction F2.

In this case, since the wiring groove k2 has an opening, the arrangement of the opening is more convenient for the passage of the wire harness. Moreover, the wiring groove k2 formed in a recessed manner is configured as the wiring portion 13a4, without adding other structures for forming the wiring space, so that the structure of the box 10 is simpler and the cost is lower.

Of course, in other embodiments, the wiring portion 13a4 may also be a structure with a wiring hole additionally provided on the outer wall of the box 10, such as a wiring post with a wiring hole.

In some embodiments, referring to Figs. 6 and 10, the lateral beam 13 is configured to form the wiring portion 13a4.

Specifically, when the wiring portion 13a4 is the wiring groove k2, the lateral beam 13 may be composed of the upper arm beam 131 and the lower arm beam 132 described in the above embodiments, and the space between the upper arm beam 131 and the lower arm beam 132 is the space where the wiring groove k2 is located. Alternatively, the outer surface of the lateral beam 13 that faces away from the main body 11 is recessed to form the wiring groove k2.

When the wiring portion 13a4 is a wiring hole, the lateral beam 13 is a hollow beam with two ends in the extending direction being provided in a penetrating manner. In this case, the inner space of the lateral beam 13 can be configured to form the wiring hole. Alternatively, the lateral beam 13 includes the upper arm beam 131, the lower arm beam 132 and the intermediate beam (not shown) described in the above embodiments, and the intermediate beam, the upper arm beam 131 and the lower wall beam jointly enclose the wiring hole.

In this case, the wiring portion 13a4 is formed by the lateral beam 13, that is, the lateral beam 13 has a wiring space, which can reduce the weight of the lateral beam 13, but can also implement the wiring.

In a specific embodiment, the upper arm beam 131 and the lower arm beam 132 are jointly configured to form a wiring portion 13a4 having a wiring space. In this case, the wiring space is formed by the space between the upper arm beam 131 and the lower arm beam 132, and the wiring portion 13a4 has a simple structure.

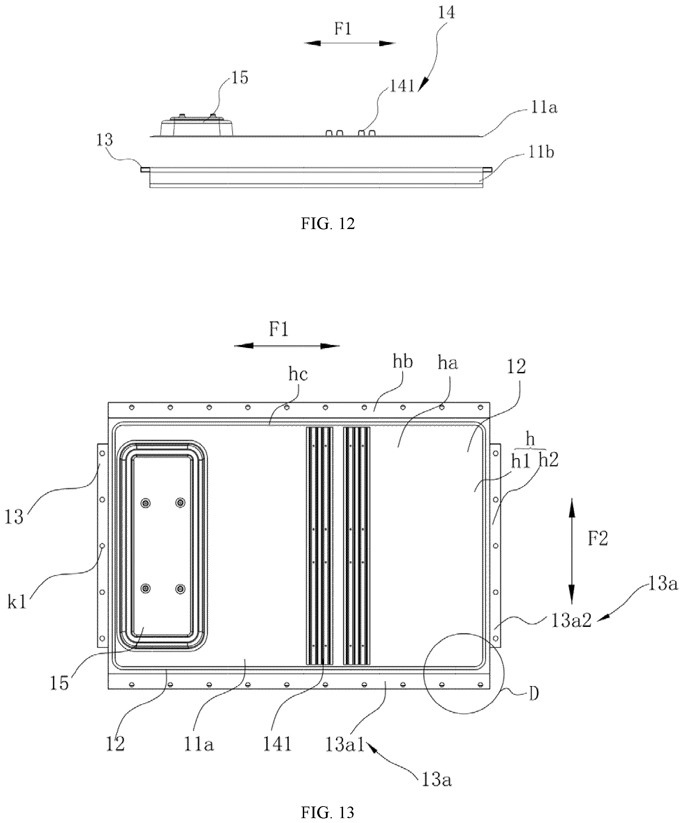

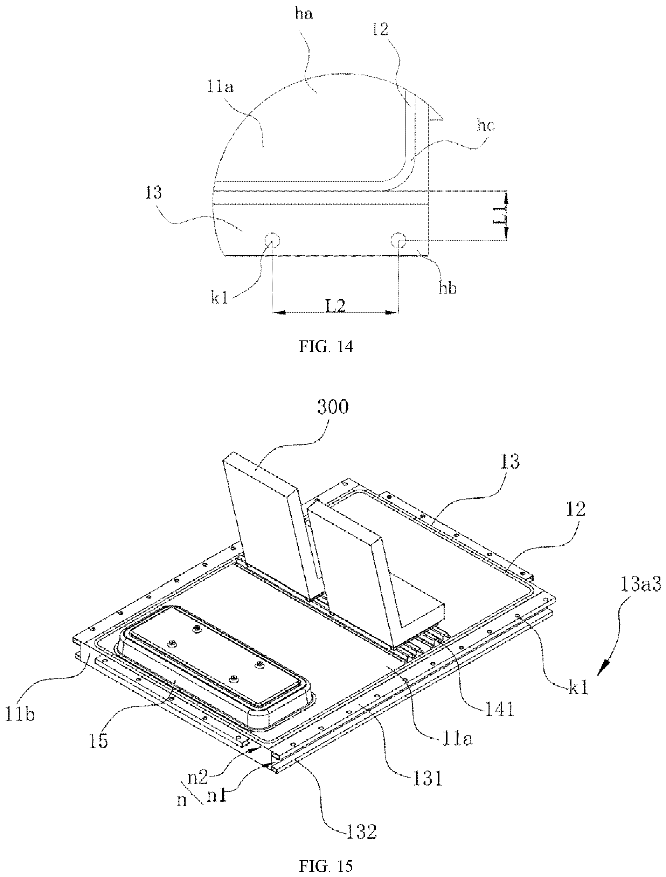

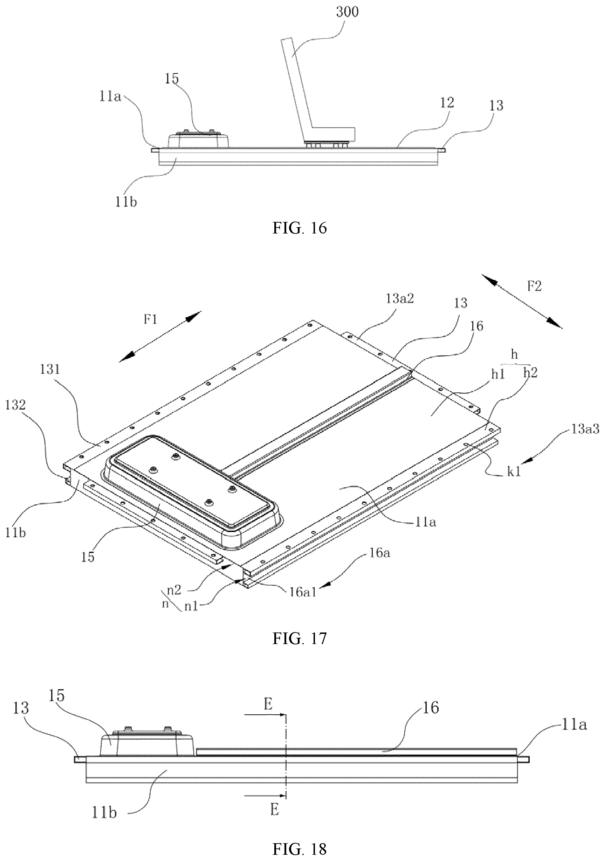

Fig. 11 is a partial schematic structural view of a battery 100 according to some other embodiments of the present application, Fig. 12 is a side and exploded view of the structure shown in Fig. 11, Fig. 13 is a side view of the structure shown in Fig. 11, and Fig. 14 is an enlarged view of part D of the structure shown in Fig. 12. Fig. 15 is a schematic diagram of an application scenario of the structure shown in Fig. 11, and Fig. 16 is a side view of the structure shown in Fig. 14.

In some embodiments, referring to Fig. 11, the box 10 further includes a sealing member 12. The sealing member 12 is arranged at the top portion of the box 10 and configured to be sealingly connected to the external device.

The sealing member 12 refers to a component that can prevent fluid or solid particles from leaking between adjacent joint surfaces. The sealing member 12 is arranged at the top portion of the box 10 and divides the top portion of the box 10 into an outer region located at the outer periphery of the sealing member 12 and an inner region enclosed by the sealing member 12. The sealing member 12 is sealingly connected between two surfaces of the top portion of the box 10 and the external device that are opposite to each other, and forms a contact interface with the two surfaces, so that it is possible to prevent the fluid or solid particles in the outer region at the outer periphery of the sealing member 12 from entering the inner region enclosed by the sealing member 12 through the contact interface between the sealing member and the two surfaces, thereby achieving a sealing effect.

The sealing member 12 is optionally a sealing ring or a sealing gasket. Specifically, the sealing member 12 is optionally made of a material such as rubber and silicone. Specifically, the sealing member 12 is optionally an O-shaped sealing member, a square sealing member, a specially-shaped sealing member, etc. The specific shape of the sealing member 12 may be adapted to the shape of the two opposite surfaces of the top portion of the box 10 and the external device. For example, when the two opposite surfaces of the top portion of the box 10 and the external device are square surfaces, the sealing member 12 may be a square sealing member.

In this case, the box 10 of the battery 100 is sealingly connected to the external device via the sealing member 12, and the sealing is reliable and the cost is low.

It can be understood that the box 10 of the battery 100 is not only sealed against the external device via the sealing member 12, but also fixedly connected to the external device via the hanging portion 13a3, and the top surface h of the box 10 is in contact with the external device in this case.

Taking the external device defined as a vehicle body 200 of a vehicle 1000 as an example, the battery 100 may be mounted to a bottom portion of the vehicle body 200, and is sealingly connected to the vehicle body 200 via a sealing member 12 in a sealing region hc. In this case, an inner region of the sealing member 12 is the interior of the vehicle body 200, and an outer region thereof is the outside of the vehicle body 200. Fluid or solid particles outside the vehicle body 200 cannot leak into the interior of the vehicle body 200, such as flying stones or splashed liquid cannot hit the interior of the vehicle body 200 during traveling of the vehicle 1000, thereby realizing the sealing and structural reliability of the interior of the vehicle body 200.

In some embodiments, referring to Figs. 7 and 11, a mounting position 141b is configured on the side of the top portion of the box 10 that faces away from the accommodating cavity s. The battery 100 is mounted to the external device via the top portion of the box 10, and the mounting position 141b forms a partial structure of the external device.

The mounting position 141b is a mounting region configured in a local region of the top portion of the box 10 for mounting a certain structure (hereinafter referred to as a mounted member). This mounted member may be a partial structure of the external device, and the mounting position 141b may be a mounting buckle, a mounting hole or other structures having a connection function. Taking the external device defined as a vehicle body 200 of a vehicle 1000 as an example, this mounting position 141b may be configured to mount a structure of the vehicle 1000 such as a seat 300 or an operating lever. The structure such as the seat 300 or the operating lever is fixedly connected to the mounting position 141b of the top portion of the box 10 via a mounting buckle, a mounting hole or other structures.

Specifically, the mounted member mounted to the mounting position 141b may be a partial structure of the external device, and the mounting position 141b configured to mount the partial structure of the external device also forms a partial structure of the external device after the top portion of the box 10 is connected to the external device. In this case, the battery 100 is mounted to the external device via the top portion of the box 10, and after the mounting position 141b of the top portion of the battery 100 forms the partial structure of the external device, the connection between the mounted member and the external device is realized by connecting the mounted member to the box 10 of the battery 100.

In this way, the partial structures of the battery 100 and the external device are integrally configured such that the partial structure of the box 10 of the battery 100 is the partial structure of the external device, thereby avoiding separate arrangement of the battery 100 and the external device.

In other embodiments, the mounted member mounted to the mounting position 141b may alternatively be a structure other than the external device, which is mounted to the mounting position 141b to achieve a fixed connection with both the battery 100 and the external device.

In a specific embodiment, as shown in Figs. 14 and 15, as an example, in which the external device is defined as a vehicle body 200 of a vehicle 1000 and the mounting position 141b is configured to mount a seat 300, by configuring the mounting position 141b at the top portion of the box 10 of the battery 100, the mounting position 141b forms the internal structure of the vehicle body 200, and an integral arrangement of the battery 100 and the vehicle body 200 is formed, so as to avoid the separation of the battery 100 from the vehicle body 200, so that the vehicle 1000 has a simple structure and a smaller size, and is more compact.

It can be understood that the fixed connection of the box 10, the vehicle body 200 and the seat 300 can ensure that all the structures are vertically connected to the top portion of the box 10 one above the other, reducing the mounting space and the mounting stress of the box 10 in other directions, so that it is possible to reduce the stress on the lateral structure and the bottom structure of the box 10 of the battery 100 and improve the structural stability of the vehicle 1000.

In some embodiments, referring to Fig. 7, the mounting position 141b includes a mounting hole formed in the top portion of the box 10.

The mounting hole is a through hole penetrating the mounting position 141b in the vertical direction. A fastener needs to be provided when mounting the seat 300 to the mounting position 141b. The mounting hole may be a smooth through hole (for example, when the fastener is a rivet), or a threaded through hole (for example, when the fastener is a screw), or other through holes (such as hexagonal holes, square holes, or waist holes). The specific form of the fixing hole 11c3 depends on the specific form and the specific arrangement of the fastener, and will not be described in details here.

The number of mounting holes is the same as the number of fasteners. A fastener is correspondingly provided in each mounting hole, and a corresponding mounted member is mounted and positioned in the mounting hole via the fastener, so that the fixed connection between the mounted member and the external device can be realized while fixing of the mounted member to the box 10 of the battery 100.

In other embodiments, the mounting position 141b may also include other structures, such as buckles or elastic locks, configured at the top portion of the box 10, which will not be specifically limited.

In some embodiments, referring to Figs. 4 to 7 and 11, the box 10 includes a main body 11 and a mounting beam 141. The main body 11 encloses the accommodating cavity s, and a top portion of the main body forms at least part of the top portion of the box 10. The mounting beam 141 is arranged at the top portion of the main body 11, and the mounting position 141b is configured on a side of the mounting beam that faces away from the main body 11.

The main body 11 may be an integrally formed structure, or may be formed by assembling a plurality of parts. The specific configuration of the main body has been explained in detail above, and will not be repeated here.

The top portion of the box 10 has a top surface h on the side facing away from the accommodating cavity s, and the mounting position 141b is in communication with the top surface h. The mounting beam 141 is a structure with a certain load-bearing capacity located on a side of the top portion of the main body 11, for sharing the acting force from the mounted member to the top portion of the box 10. As shown in Figs. 15 and 16, when the mounted member is a seat 300, an operator will apply pressure while sitting on the seat 300, and the pressure will be applied to the mounting beam 141 first, and then to the top portion of the box 10.

The mounting beam 141 may be directly arranged on the surface of the top surface h or on a recessed or protruding portion formed on the top surface h, and one or more load-bearing structures included in the mounting beam 141 jointly form the mounting position 141b for fixing the mounted member on the side facing away from the top surface h, so as to realize the connection between the mounted member and the top portion of the box 10.

The arrangement and the extending direction of the load-bearing structures are set according to the size, weight and specific structure of the mounted member that needs to be mounted to the mounting position 141b, which will not be specifically limited. The mounting beam 141 shares the acting force on the top portion of the main body 11 to improve the load-bearing capacity of the box 10 of the battery 100.

In some embodiments, the mounting beam 141 is fixedly connected to or integrally formed with the main body 11.

The mounting beam 141 may be fixedly connected to the main body 11 by fastening connection, snap-fitting via a snap-fit structure, welding, bonding, hot-melt connection, etc. Of course, the mounting beam 141 may be integrally formed with the main body 11 by injection molding, die-casting, forging, cold pressing, hot pressing, etc.

When the main body 11 is made of metal (such as aluminum, iron, or stainless steel), the mounting beam 141 may be integrally formed with the main body 11 by die-casting, forging, hot pressing, cold pressing, etc. When the main body 11 is made of a plastic material (such as PP, PE, or ABS), the mounting beam 141 may be integrally formed with the main body 11 by injection molding. The mounting beam 141 and the main body 11 may alternatively be formed separately and then connected together. When the mounting beam 141 and the main body 11 are made of metal, the mounting beam 141 and the main body 11 may be welded or bonded together. When the mounting beam 141 and the main body 11 are made of a plastic material, the mounting beam 141 and the main body 11 may be bonded together.

When the mounting beam 141 is fixedly connected to the main body 11, the forming process of the mounting beam 141 and the main body 11 is relatively easy, and the process cost of the box 10 can be reduced.

When the mounting beam 141 is integrally formed with the main body 11, the box 10, the external device and the mounted member are assembled conveniently.

In other embodiments, the main body 11 is connected to a part other than the mounting beam 141, and the connection method may be either integral forming or fixed connection, which will not be specifically limited.

In some embodiments, referring to Figs. 7 and 11, the mounting beam 141 includes at least one protrusion 141a, each protrusion 141a protrudes from the top portion of the main body 11 in a direction away from the accommodating cavity s, and each protrusion 141a and the main body 11 jointly form a weight-reducing channel 141a1; and the mounting position 141b is configured on a side of the protrusion 141a that faces away from the main body 11.

The protrusion 141a is the load-bearing structure included in the mounting beam 141 described above, which protrudes in the direction away from the accommodating cavity s relative to the plane where the top surface h of the box 10 is located, and the protrusion 141a itself has a certain height, so that the protrusion protrudes from the top surface h of the box 10. As the mounting position 141b is formed on the side of each protrusion 141a that faces away from the main body 11, the mounted member is in direct contact with the structure of the protrusion 141a instead of the top surface h when being mounted to the mounting position 141b, thereby distributing the force on the top portion of the box 10 by means of the protrusion 141a, and increasing the load-bearing capacity of the top portion of the box 10.

Each protrusion 141a may form a structure with multiple sides surrounding an opening end. The top surface h1 of the main body 11 covers the opening of each protrusion 141a and forms a weight-reducing channel 141a1 together with the protrusion. The weight-reducing channel 141a1 may be formed by hollowing out the interior of the protrusion 141a or by drilling, grooving or other means, so as to realize the lightweight design of the box 10.

In a specific embodiment, each protrusion 141a is internally provided with a weight-reducing channel 141a1 penetrating therethrough in its own extending direction. The provision of the weight-reducing channel 141a1 reduces the weight of each protrusion 141a, thereby reducing the overall weight of the box 10 and reducing the cost. Each weight-reducing channel 141a1 provided in a penetrating manner may form a hidden channel. In other embodiments, the hidden channel may also be used for operations such as the arrangement of hidden lines.

In some embodiments, referring to Figs. 6 to 7, all the protrusions 141a extend in the same direction and are arranged spaced apart from each other.

The direction referred to by "the same direction" may specifically be the first direction F1 or the second direction F2 mentioned above, or a direction that is coplanar and intersecting with the first direction F1 and the second direction F2, which will not be specifically limited.

By all the protrusions 141a being arranged spaced apart from each other, it is meant that there is a set interval between every two adjacent protrusions 141a in a direction intersecting with the extending direction of the protrusions 141a. Under the action of the set interval, a buffer space is formed between every two adjacent protrusions 141a, so that it is possible to prevent the external force acting on the mounting beam 141 from being transmitted to the box 10 and damaging the battery 100. Moreover, the plurality of protrusions 141a arranged spaced apart from each other can form a sufficiently large support area and fixing positions to realize large-area support for the mounted member, and can be adapted to the mounting of mounted members of different volumes and sizes.

All the protrusions 141a are arranged in parallel in the same direction, so that the buffer space and the protrusions 141a extend in the same direction. In a practical application, buffering can be achieved at any position of the mounting beam 141 in the extending direction.

The set intervals between every two adjacent protrusions 141a may be equal or not equal. It can be understood that, to ensure uniform support for the mounted member, the set intervals between every two adjacent protrusions 141a are equal.

In some embodiments, the sides of all the protrusions 141a that face away from the main body 11 are located on the same plane.

All the protrusions 141a are configured to protrude toward the same direction, and the protruding heights of all the protrusions 141a are the same, so that the sides of all the protrusions 141a that face away from the mounting cavity form a flat plane in a certain direction, for example, forming a flat plane on the horizontal plane. The mounted member is placed on the flat plane for mounting, the mounting is more stable and simple, and a firm connection between the mounted member and the mounting beam 141 can be realized.

In a specific embodiment, the protrusions 141a may be of a quadrangular prism structure, and the surfaces of all the protrusions 141a on the same side are located on the same plane and jointly define a mounting position 141b for mounting the mounted member, so that the mounted member is stably placed on the mounting beam 141.

In some embodiments, referring to Figs. 4, 7 and 11, the box 10 further includes a side-impact reinforcement beam 14. The side-impact reinforcement beam 14 is arranged at the top portion of the main body 11 and extends from the middle of the top portion of the main body 11 to outer edges on two opposite sides of the top portion of the main body 11.

The side-impact reinforcement beam 14 refers to a beam structure arranged on the top portion of the main body 11 to enhance the strength of the main body 11. It can be understood that the side-impact reinforcement beam 14 is located outside the main body 11. Specifically, the main body 11 and the side-impact reinforcement beam 14 are integrally connected into a whole, and may also be connected into a whole by assembling. The integral connection includes, but is not limited to, welding, integral forming, and welding. The assembled connection includes, but is not limited to, snap-fitting and threaded connection.

The side-impact reinforcement beam 14 may extend from the middle of the top portion of the main body 11 to the outer edges on two opposite sides of the top portion of the main body 11 in the first direction F1. In this case, the side-impact reinforcement beam 14 can enhance the side impact resistance of the box 10 in the first direction F1. The side-impact reinforcement beam 14 may alternatively extend from the middle of the top portion of the main body 11 to the outer edges on two opposite sides of the top portion of the main body 11 in the second direction F2. In this case, the side-impact reinforcement beam 14 can enhance the side impact resistance of the box 10 in the second direction F2.

The side-impact reinforcement beam 14 may extend in two collinear directions respectively from the middle of the top portion of the main body 11 to the outer edges on two opposite sides of the top portion of the main body 11, or may extend in two intersecting directions respectively from the middle of the top portion of the main body 11 to the outer edges on two opposite sides of the top portion of the main body 11. When the side-impact reinforcement beam 14 extends in two collinear directions from the middle of the top portion of the main body 11 to the outer edges on two opposite sides, the side-impact reinforcement beam 14 is implemented by a straight beam, so that the structure is simpler.

The side-impact reinforcement beam 14 may extend to the outer edges on two sides, or to a region between the outer edges on two sides and the middle, or to regions outside the outer edges on two sides. That is, the specific extension length of the side-impact reinforcement beam 14 is not limited, as long as it extends from the middle of the top portion of the main body 11 to the outer edges on two opposite sides of the top portion of the main body 11.

When the battery 100 is applied to a vehicle 1000, and the top portion of the box 10 is configured as a chassis of the vehicle 1000, since the vehicle 1000 has poor side impact resistance in the left and right directions, the side-impact reinforcement beam 14 may be designed to extend from the middle of the top portion of the main body 11 toward the outer edges on two sides of the top portion of the main body 11 in the left and right directions of the vehicle 1000, to enhance the side impact resistance of the vehicle 1000 in the left and right directions and improve the safety performance of the vehicle 1000.

In this case, the side-impact reinforcement beam 14 arranged at the top portion of the main body 11 of the box 10 can improve the side impact resistance of the box 10, and then improve the side impact resistance of the vehicle 1000 loaded with the battery 100 composed of the box 10, to help to ensure the safety performance of the battery 100 and the vehicle 1000.

When the main body 11 includes the border 11b and the carrier 11a, the side-impact reinforcement beam 14 is at least arranged at the top portion of the carrier 11a. In this case, since the top portion of the carrier 11a forms at least part of the top portion of the main body 11, the carrier 11a has a sufficient space for mounting the side-impact reinforcement beam 14.

In some embodiments, the side-impact reinforcement beam 14 extends so as to be connected to a top portion of the border 11b.

In this case, the top portion of the border 11b also forms part of the top portion of the main body 11, and the side-impact reinforcement beam 14 can also extend so as to be connected to the top portion of the border 11b. In addition to the direct connection between the border 11b and the carrier 11a, the connection between the border and the carrier can also be enhanced by means of the side-impact reinforcement beam 14, so that the reliability of the connection between the border 11b and the carrier 11a can be enhanced.

In some embodiments, there is at least one side-impact reinforcement beam 14, and all the side-impact reinforcement beams 14 extend in the same direction and are arranged spaced apart from each other.

The direction referred to by "the same direction" may specifically be the first direction F1 or the second direction F2 mentioned above, or a direction that is coplanar and intersecting with the first direction F1 and the second direction F2, which will not be specifically limited.

All the side-impact reinforcement beams 14 extend in the same direction, and each side-impact reinforcement beam 14 can enhance the side impact resistance of the box 10 in the extending direction, so that the side impact resistance of the box 10 in the extending direction is enhanced. It can be understood that the side-impact reinforcement beams 14 are arranged spaced apart from each other in a direction intersecting with the "same direction", so that the strength of the box 10 at a plurality of positions can be enhanced, and the structural strength and the side impact resistance of the box 10 can be made more uniform.

In some embodiments, at least one of the side-impact reinforcement beams 14 is configured as a mounting beam 141, and a mounting position 141b is configured on a side of the mounting beam 141 that faces away from the main body 11.

The mounting beam 141 and the mounting position 141b are set forth in detail in the above description, and will not be described again here. When there is one side-impact reinforcement beam 14, the side-impact reinforcement beam 14 is used as the mounting beam 141. When there are at least two side-impact reinforcement beams 14, some of them may be used as the mounting beam 141. Specifically, when there are at least two side-impact reinforcement beams 14, the side-impact reinforcement beam 14 near the front of the vehicle 1000 can be used as the mounting beam 141 for mounting the seat 300 (the seat 300 may be a seat 300 in a cab).

In this case, using at least one of the side-impact reinforcement beams 14 as the mounting beam 141 not only has the effect of preventing side impact, but can also have other mounted member mounted thereon.

In some embodiments, the side-impact reinforcement beam 14 includes at least one protrusion 141a, each protrusion 141a protrudes from the top portion of the main body 11 in a direction away from the accommodating cavity s, and each protrusion 141a and the main body 11 jointly form a weight-reducing channel 141a1.

The protrusion 141a of the side-impact reinforcement beam 14 may have the same structure as the protrusion 141a mentioned when introducing the structure of the mounting beam 141 in the above embodiments, and the specific description may refer to the above description. The protrusion 141a protrudes in the direction away from the accommodating cavity s relative to the plane where the top surface h1 of the main body 11 is located, and the protrusion 141a itself has a certain height, so that the protrusion protrudes from the top surface h1 of the main body 11.

Each protrusion 141a may form a structure with multiple sides surrounding an opening end. The top surface h1 of the main body 11 covers the opening of each protrusion 141a and forms a weight-reducing channel 141a1 together with the protrusion. The weight-reducing channel 141a1 may be formed by hollowing out the interior of the protrusion 141a or by drilling, grooving or other means, so as to realize the lightweight design of the box 10.

In a specific embodiment, each protrusion 141a is internally provided with a weight-reducing channel 141a1 penetrating therethrough in its own extending direction. The provision of the weight-reducing channel 141a1 reduces the weight of each protrusion 141a, thereby reducing the overall weight of the box 10 and reducing the cost. Each weight-reducing channel 141a1 provided in a penetrating manner may form a hidden channel. In other embodiments, the hidden channel may also be used for operations such as the arrangement of hidden lines.

In some embodiments, referring to Fig. 7, all the protrusions 141a extend in the same direction and are arranged spaced apart from each other.

By all the protrusions 141a being arranged spaced apart from each other, it is meant that there is a set interval between every two adjacent protrusions 141a in a direction intersecting with the extending direction of the protrusions 141a. Under the action of the set interval, a buffer space is formed between every two adjacent protrusions 141a, so that it is possible to prevent the external force acting on the mounting beam 141 from being transmitted to the box 10 and damaging the battery 100. Moreover, the plurality of protrusions 141a arranged spaced apart from each other can form a sufficiently large support area and fixing positions to realize large-area support for the mounted member, and can be adapted to the mounting of mounted members of different volumes and sizes.

All the protrusions 141a are arranged in parallel in the same direction, so that the buffer space and the protrusions 141a extend in the same direction. In a practical application, buffering can be achieved at any position of the side-impact reinforcement beam 14 in the extending direction.

The set intervals between every two adjacent protrusions 141a may be equal or not equal. It can be understood that, when the side-impact reinforcement beam 14 is used as the mounting beam 141, to ensure uniform support for the mounted member, the set intervals between every two adjacent protrusions 141a are equal.

In some embodiments, the sides of all the protrusions 141a that face away from the main body 11 are located on the same plane.

One side of each protrusion 141a is located on the top surface h1 of the main body 11, and all the protrusions are arranged to protrude toward the same direction and have the same protruding height, so that the sides of all the protrusions 141a that face away from the mounting cavity form a flat plane in a certain direction, for example, forming a flat plane on the horizontal plane, so as to realize a firm connection between the mounted member and the mounting beam 141.

In a specific embodiment, the protrusions 141a may be of a quadrangular prism structure, and the surfaces of all the protrusions 141a on the same side are located on the same plane and jointly define a mounting position 141b for mounting the mounted member, so that the mounted member is stably placed on the mounting beam 141.

In some embodiments, referring to Fig. 10, the box 10 is provided with a battery cavity s1 and a high-voltage cavity s2 which are arranged separately from each other. The battery cavity s1 is configured to accommodate the battery cell 20, and the high-voltage cavity s2 is configured to accommodate a high-voltage casing.

The high-voltage casing is an important safety barrier for a battery 100 group, and is equipped with a high-voltage control system which is mainly configured to: turn on or off a high-voltage circuit according to the electrical control requirements of the vehicle; provide current and leakage detection terminals; perform controllable load cut-off when the external current of the battery 100 group is too large; turn off the high-voltage circuit to prevent the battery 100 group from catching fire when a short circuit occurs in an external circuit of the battery 100 group; and be able to easily cut off the high-voltage circuit when the battery 100 group is being repaired.

By the battery cavity s1 and the high-voltage cavity s2 being arranged separately from each other, it is meant that the battery cavity s1 and the high-voltage cavity s2 are sealed from each other. In order to realize the separate arrangement of the battery cavity s1 and the high-voltage cavity s2, the battery cavity s1 and the high-voltage cavity s2 may be respectively formed by two separate members. For example, the box 10 is internally provided with a first member and a second member separate from each other, the first member forms the battery cavity s1, and the second member forms the high-voltage cavity s2. Alternatively, a partition is provided inside the box 10 to divide the accommodating cavity s formed in the box 10 to form a battery cavity s1 and a high-voltage cavity s2 separate from each other. Alternatively, the accommodating cavity s formed inside the box 10 is completely used as a battery cavity s1, and a high-voltage compartment 15 is configured outside the box 10 to form a high-voltage cavity s2, so as to realize the mutual separation of the battery cavity s1 and the high-voltage cavity s2.

The battery cavity s1 is configured to accommodate the battery cell 20, and the high-voltage cavity s2 is configured to accommodate the high-voltage casing. When the battery cavity s1 and the high-voltage cavity s2 are arranged separately from each other, high-temperature gas leaked from a battery cell 20 subject to thermal failure in the battery cavity s1 will not enter the high-voltage casing, and thus will not cause thermal damage to the high-voltage control system in the high-voltage casing, so that it is possible to ensure the normal control function of the high-voltage control system and improve the safety performance of the battery 100.

In some embodiments, referring to Figs. 11 to 13, the box 10 further includes a high-voltage compartment 15, a battery cavity s1 is formed in the main body 11, and the high-voltage compartment 15 is arranged outside the main body 11, and encloses, itself or together with the main body 11, a high-voltage cavity s2.

The high-voltage compartment 15 may be of a housing 22 structure, and its interior is hollow to form a high-voltage compartment 15 for having a high-voltage casing placed therein. The high-voltage compartment 15 is arranged outside the main body 11, and the battery cavity s1 is formed by the main body 11 (in this case, the battery cavity s1 is equivalent to the accommodating cavity s), thus realizing the separate arrangement of the high-voltage cavity s2 and the battery cavity s1.

When the high-voltage compartment 15 and the main body 11 jointly form the high-voltage cavity s2, the high-voltage compartment 15 has an opening and is mounted to the main body 11 via the opening. When the high-voltage compartment 15 itself encloses the high-voltage cavity s2, there is only the mounting relationship between the high-voltage compartment and the main body 11.

In this case, the high-voltage cavity s2 is defined by the high-voltage compartment 15 arranged outside the main body 11, and the accommodating cavity s formed by the main body 11 can be used as the battery cavity s1 to accommodate the battery cell 20, so that the capacity of the battery 100 can be increased.

In some embodiments, referring to Figs. 11 to 12, the high-voltage compartment 15 protrudes from the top portion of the main body 11.

By the high-voltage compartment 15 protruding from the top portion of the main body 11, it is meant that the high-voltage compartment 15 is located outside the main body 11 and arranged on the top surface h1 of the main body 11. When the box 10 of the battery 100 is used as the chassis of the vehicle 1000, the high-voltage compartment 15 is located at the top portion of the main body 11, thus will not be exposed to the outside of the vehicle 1000, and can be protected from external impacts (such as flying stones during the traveling of the vehicle 1000), so that the high-voltage compartment15 is safer.

It can be understood that when the main body 11 includes the border 11b and the carrier 11a as described above, the carrier 11a constitutes at least part of the top portion of the main body 11, and the high-voltage compartment 15 is arranged at the top portion of the carrier 11a, and encloses, itself or together with the carrier 11a, the high-voltage cavity s2. In this case, since the carrier 11a constitutes most of the region of the top portion of the main body 11, the high-voltage compartment 15 is arranged at the top portion of the carrier 11a, so that the mounting space of the high-voltage compartment 15 is larger and the mounting is more stable.

Of course, when the top portion of the border 11b is also configured as a part of the top portion of the main body 11, the high-voltage compartment 15 may alternatively be arranged at the top portion of the border 1 1b, which may be specifically set according to the mounting method of the border 11b and the carrier 11a.

In some embodiments, referring to Figs. 11 to 13, the high-voltage compartment 15 is arranged close to an outer edge of the top portion of the main body 11.

The outer edge of the top portion of the main body 11 includes: an outer edge of the top portion of the main body 11 on one side in the front direction of the vehicle 1000, an outer edge of the top portion of the main body 11 on one side in the rear direction of the vehicle 1000, an outer edge of the top portion of the main body 11 on one side in the left direction of the vehicle 1000, and an outer edge of the top portion of the main body 11 on one side in the right direction of the vehicle 1000.

In an application example, the high-voltage compartment 15 is arranged close to the outer edge of the top portion of the main body 11 on one side in the rear direction of the vehicle 1000, that is, the high-voltage compartment 15 is arranged close to the rear of the vehicle 1000. In this case, the high-voltage compartment 15 may be arranged corresponding to a passenger space in the rear of a driving space of the vehicle 1000, and in particular, may be arranged corresponding to the bottom of the seat 300 in the passenger space rather than occupying the activity space of the vehicle 1000.

In some embodiments, referring to Figs. 4, 6, and Figs. 11 to 13, the high-voltage compartment 15 and the side-impact reinforcement beam 14 are sequentially arranged in the first direction F1, and the side-impact reinforcement beam 14 is configured to extend in a second direction F2 intersecting with the first direction F1.

When the box 10 includes the side-impact reinforcement beam 14, the high-voltage compartment 15 and the side-impact reinforcement beam 14 may both be arranged at the top portion of the main body 11.

By the high-voltage compartment 15 and the side-impact reinforcement beam 14 being sequentially arranged in the first direction F1, it is meant that the high-voltage compartment 15 is located on one side of all the side-impact reinforcement beams 14 in the first direction F1. In addition, the side-impact reinforcement beam 14 extends in the second direction F2 intersecting with the first direction F1 without interfering with the high-voltage compartment 15. The structural arrangement of the high-voltage compartment 15 and the side-impact reinforcement beam 14 is relatively reasonable, and the space utilization rate of the top portion of the main body 11 is relatively high.

In a specific embodiment, referring to Fig. 4, the high-voltage compartment 15 includes a compartment cover 15a and a compartment casing 15b. The compartment casing 15b is arranged at the top portion of the main body 11 and is provided with a high-voltage cavity s2 with an opening which faces away from the main body 11, and the compartment cover 15a detachably covers the opening side of the high-voltage cavity s2.

The compartment casing 15b and the main body 11 may be connected to each other by welding, soldering, bonding, fastening, etc. Without limitation, the compartment casing 15b may be made of plastic. The compartment cover 15a and the compartment casing 15b may be detachably connected to each other via a fastener, or may be detachably connected to each other by snap-fitting, and the specific form is not limited.

In this case, the high-voltage cavity s2 is formed by the compartment casing 15b, the high-voltage cavity s2 is sealed by the compartment cover 15a, and the compartment cover 15a is detachably connected to the compartment casing 15b, facilitating the mounting and repairing of the high-voltage casing.

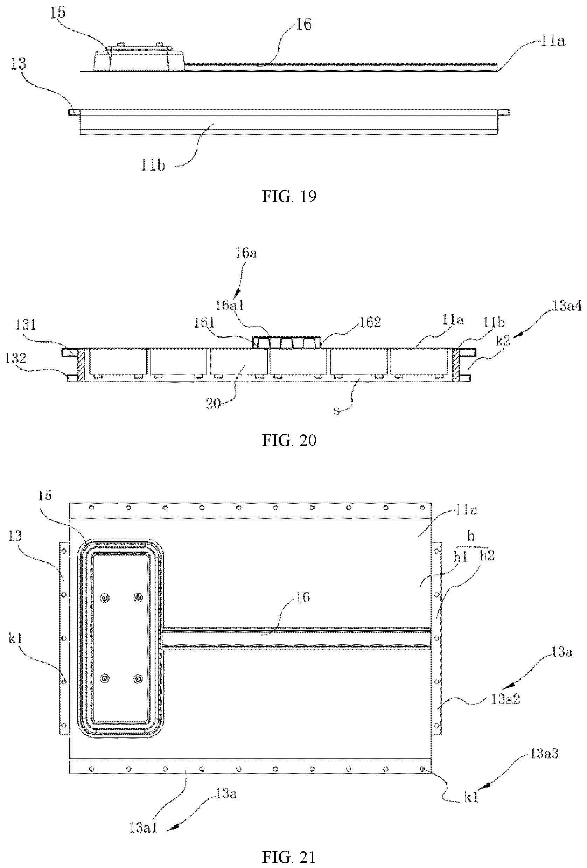

Fig. 17 is a partial schematic structural view of a battery 100 according to some other embodiments of the present application, Fig. 18 is a side view of the structure shown in Fig. 17, Fig. 19 is an exploded view of the structure shown in Fig. 18, and Fig. 20 is a cross-sectional view taken through E-E of the structure shown in Fig. 18. Fig. 21 is a top view of the structure shown in Fig. 17.

In some embodiments, referring to Figs. 17 to 21, the box 10 further includes a middle channel beam 16. The middle channel beam 16 extends in the first direction F1, is arranged at the top portion of the main body 11, and is arranged equidistant from outer edges of the top portion of the main body 11 on two sides in the second direction F2 intersecting with the first direction F1. The middle channel beam 16 is provided with a wiring channel 16a through which the wire harness passes.

In a traditional vehicle 1000, the structure of the middle channel beam 16 is generally provided on the chassis of the vehicle body 200 of the vehicle 1000. The middle channel beam 16 is a beam structure extending from the front chassis to the rear chassis on the vehicle body 200 of the vehicle 1000, is a collision transmission path of the vehicle body 200, and is a main structural member for ensuring the rigidity of a floor of the vehicle body 200. The middle channel beam 16 is arranged in a middle region of the chassis of the vehicle 1000, and extends from the front chassis to the rear chassis in the front and rear directions of the vehicle 1000.

In this embodiment, the middle channel beam 16 of the vehicle 1000 is directly integrated to the top portion of the main body 11 of the box 10. Specifically, the middle channel beam 16 extends in the first direction F1 (corresponding to the front and rear directions of the vehicle body 200), and is arranged equidistant from the outer edges of the top portion of the main body 11 on two sides in the second direction F2 (corresponding to the left and right directions of the vehicle body 200), so that the middle channel beam is arranged in the middle region of the top portion of the main body 11.

Generally, in order to reduce the weight of the vehicle body 200 and realize the lightweight of the vehicle body 200, the middle channel beam 16 is designed as a hollow structure. In this embodiment, the hollow structure inside the middle channel beam 16 is used to form the wiring channel 16a through which the wire harness passes, so that not only can the weight be reduced, but the arrangement of the wire harness can also be realized, making the arrangement of the wire harness more flexible and safer.

The middle channel beam 16 may be a sheet metal member integrally formed by stamping, die-casting, etc., or a beam structure formed by connecting multiple sheet metal plates by welding, soldering or fastening, as long as a wiring channel 16a can be formed for wiring. The wiring channel 16a may be located inside the middle channel beam 16 (such as a duct inside the middle channel beam 16), or may be located outside the middle channel beam 16 (such as a grooved channel recessed outside the middle channel beam 16). The middle channel beam 16 may form the wiring channel 16a together with the main body 11, or may itself enclose the wiring channel 16a. The middle channel beam 16 and the main body 11 may be connected to each other by welding, soldering, fastening connection, etc., so as to form a whole.

The wiring channel 16a of the middle channel beam 16 may extend in the extending direction of the middle channel beam 16 (namely in the first direction F1), or may be designed according to other requirements, which will not be specifically limited, as long as the wiring can be realized. The middle channel beam 16 may be provided with a plurality of separate wiring channels 16a, so as to realize the classified routing of various types of wire harnesses and facilitate the mounting and maintenance.

In this case, when the top portion of the box 10 is configured as the chassis of the vehicle body 200 of the vehicle 1000 (the chassis is the floor of the vehicle body 200), there is no need to additionally provide the middle channel beam 16, and the assembly efficiency of the vehicle body 200 is higher. Moreover, the hollow structure formed inside the middle channel beam 16 is used to form the wiring channel 16a through which the wire harness passes, so that not only can the weight be reduced, but the arrangement of the wire harness can also be realized, making the arrangement of the wire harness more flexible.

In some embodiments, referring to Fig. 20, the middle channel beam 16 includes a beam base 161. The beam base 161 is arranged at the top portion of the main body 11, and is provided with a wire passage groove 16a1 used as the wiring channel 16a. The wire passage groove 16a1 is recessed toward the accommodating cavity s.

The beam base 161 is directly arranged at the main body 11, and may be fixed to the main body 11 by welding, soldering, fastening connection, etc. The beam base 161 is provided with a wire passage groove 16a1, and the wire passage groove 16a1 is recessed toward the accommodating cavity s, that is, the wire passage groove 16a1 has a groove opening which faces away from the accommodating cavity s, through which the wire harness passes conveniently.

The wire passage groove 16a1 may be a continuous groove structure formed by a recess on a side surface of the beam base 161 that faces away from the accommodating cavity s, or may be a plurality of wire passage portions configured on a side surface of the beam base 161 that faces away from the accommodating cavity s and having grooves which are recessed toward the accommodating cavity. The wire passage portions are arranged spaced apart from each other in a set direction, and the grooves of all the wire passage portions jointly form the wire passage groove 16a1 of the beam base 161.

In this case, the beam base 161 forms a wire passage groove 16a1 recessed toward the accommodating cavity s, so as to facilitate the mounting of the wire harness.

In some embodiments, referring to Fig. 20, there are a plurality of wire passage grooves 16a1, and all the wire passage grooves 16a1 extend in the same direction and are arranged spaced apart from each other.

There are a plurality of wire passage grooves 16a1, and the plurality of wire passage grooves 16a1 may extend in the same direction (such as in the first direction F1) and are spaced apart from each other. Each wire passage groove 16a1 may be used for the wiring of a type of wire harness (the wire harnesses may be classified according to the different objects connected to the wire harnesses, such as a wire harness connected to an air conditioner, a wire harness connected to a vehicle lamp, and a wire harness connected to a power driving system).

In this way, the separate arrangement of different types of wire harnesses can be realized, which is more convenient for the mounting and maintenance of the wire harnesses.

In some embodiments, the wire passage groove 16a1 is configured to be snap-fitted with the wire harness passing through itself.

In order to realize the snap-fitting of the wire passage groove 16a1 with the wire harness, specifically, the size of the groove opening of the wire passage groove 16a1 is equivalent to the diameter of the wire harness passing through itself, or the two have an interference fit to realize the snap-fit connection. Specifically, it is also possible to design a snap-fit member at the groove opening of the wire passage groove 16a1, and the snap-fit member has one end rotatably connected to one side of the groove opening of the wire passage groove 16a1, and the other end detachably snap-fitted with the other side of the groove opening of the wire passage groove 16a1. When the wire harness is arranged in the wire passage groove 16a1, the wire harness is snap-fitted in the wire passage groove 16a1 by using the snap-fit member snap-fitting with the groove opening of the wire passage groove 16a1.

In this way, noise caused by the shaking of the wire harness can be avoided, and the problem of damage to the wire harness caused by the wire harness being detached from the wire passage groove 16a1 can also be avoided.

In some embodiments, referring to Fig. 20, the middle channel beam 16 further includes a beam cover 162. The beam cover 162 detachably covers the opening side of the wire passage groove 16a1.

The opening side of the wire passage groove 16a1 is the side where the groove opening of the wire passage groove 16a1 is located. The beam cover 162 detachably covers the opening side of the wire passage groove 16a1, that is, the beam cover 162 is detachably connected to the beam base 161. Specifically, the beam cover 162 is detachably snap-fitted with the beam base 161, or the beam cover 162 is detachably connected to the beam base 161 via a fastener (such as a bolt), so as to realize the detachable connection between the beam cover 162 and the beam base 161, which is a conventional arrangement in the art. No limitation or repeated description is given here.

In this case, the beam cover 162 covering the groove opening of the wire passage groove 16a1 can prevent external dust and moisture from entering the wire passage groove 16a1 to corrode the wire harness, and can also protect the wire harness from being squeezed and damaged by external force, so that the safety of the battery 100 can be improved.

In some embodiments, the high-voltage cavity s2 is in communication with the wiring channel 16a.

It can be understood that the wire harness is generally led out from the high-voltage casing in the high-voltage cavity s2 and then supplies power to an electrical means, so the wire harness passes through the high-voltage cavity s2 and the wiring channel 16a.

By the high-voltage cavity s2 being in communication with the wiring channel 16a, it is meant that the wire harness coming out of the high-voltage cavity s2 can enter the wiring channel 16a. Specifically, it is possible that the high-voltage cavity s2 has a wiring opening, and the wiring opening is opposite to an entrance of the wiring channel 16a. In this case, there is no obstacle between the wiring opening and the entrance of the wiring channel 16a. The wire harness coming out of the wiring opening can directly enter the entrance of the wiring channel 16a without turning. Specifically, it is also possible that the high-voltage cavity s2 has a wiring opening, and the wiring opening is not opposite to an entrance of the wiring channel 16a but is in spatial communication with each other. In this case, there is an obstacle between the wiring opening and the entrance of the wiring channel 16a (the obstacle may be formed by the middle channel beam 16 or other structures), and the wire harness coming out of the wiring opening needs to turn around to avoid the obstacle and then enter the wiring channel 16a through the entrance of the wiring channel 16a.

In this case, the high-voltage cavity s2 is in communication with the wiring channel 16a, and the wire harness coming out of the high-voltage cavity s2 can be arranged by means of the wiring channel 16a.

In some embodiments, referring to Figs. 17 and 21, the middle channel beam 16 and the high-voltage compartment 15 are arranged adjacent to each other in the first direction F1.

The middle channel beam 16 generally correspondingly extends from the front chassis of the vehicle body 200 to the rear chassis of the vehicle body 200. The high-voltage compartment 15 is located on one side of the middle channel beam 16 in the first direction F1. The high-voltage compartment 15 may be arranged in front of or behind the middle channel beam 16. Specifically, it is possible that the high-voltage compartment 15 is arranged behind the middle channel beam 16, and the high-voltage compartment 15 corresponds to the position of the rear chassis of the vehicle body 200. Since the position of the rear chassis of the vehicle body 200 can be used to mount the seat 300 of the passenger compartment of the vehicle 1000, the arrangement of the high-voltage compartment 15 can be realized by hiding the high-voltage compartment 15 in the space under the seat 300, so that the space utilization rate of the passenger compartment of the vehicle 1000 is higher.

In some embodiments, referring to Fig. 11, the top surface h of the box 10 is provided with a first region ha and a second region hb. The second region hb surrounds the first region ha, the second region hb is configured with a plurality of hanging portions 13a3, and the battery 100 is mounted to an external device via the hanging portions 13a3.

The first region ha and the second region hb can be formed by dividing by means of another structure. For example, a sealing member 12 is arranged at the top portion of the box 10 and divides the top surface h of the box 10 into a second region hb located at the outer periphery of the sealing member 12 and a first region ha located at the inner periphery of the sealing member 12. When the battery 100 is mounted to the external device via the hanging portions 13a3, the first region ha and the second region hb are separate from each other.

The first region ha and the second region hb may alternatively be formed by automatically partitioning the top surface h. In this case, there is no other structural gap between the first region ha and the second region hb. When the battery 100 is mounted to the external device via the hanging portions 13a3, the first region ha and the second region hb may alternatively be in communication with each other.

Moreover, the area of the first region ha and the area of the second region hb are not defined, the first region ha and the second region hb may be flat surfaces or uneven surfaces, and their specific structures are not limited.

In a specific embodiment, if the external device is defined as the vehicle body 200 of the vehicle 1000, the hanging portions 13a3 are configured and formed in the second region hb, such that the box 10 is connected to the vehicle body 200 via a relatively outer region of the top portion. In this case, the box 10 is only subjected to the force in the vertical direction of the vehicle body 200, the force transmission path is reduced, which is more conducive to improving the rigidity and the lateral squeezing resistance of the vehicle.

It can be understood that, in addition to including the first region ha and the second region hb, the top surface h of the box 10 may further include other regions, which may be arranged between the two, at the outer peripheries of the two, or inside the two, which will not be specifically limited in the present application.

In some embodiments, referring to Figs. 13 to 14, a distance L2 between the geometric centers of the orthographic projections of every two adjacent hanging portions 13a3 on the second region hb is 80 mm-500 mm.

The orthographic projection refers to a form of parallel projection in which the projection lines are orthogonal to the projection plane. That is, the hanging portion 13a3 is projected on the second region hb in a direction perpendicular to the second region hb. When the hanging portions 13a3 are connected to an external device, each hanging portion 13a3 has a hanging stress point, and the geometric center of the orthographic projection of each hanging portion 13a3 on the second region hb is the hanging stress point. The distance between two adjacent hanging stress points (that is, the distance L2) is defined to be 80-500 mm, so as to ensure that the battery 100 is evenly hanged to the external device, and increase the connection strength between the battery 100 and the external device.

In a specific embodiment, when the external device is defined as the vehicle body 200 of the vehicle 1000, the hanging portion 13a3 is configured to include a plurality of hanging holes k1, and the box 10 of the battery 100 is connected to the vehicle body 200 by means of the plurality of hanging holes k1. Moreover, the distance L2 between the geometric centers of the adjacent hanging holes k1 is within a defined range to ensure that the set distance between a hanging hole k1 and an adjacent hanging hole k1 (that is, the distance L2) is controllable, and the set distance between a hanging hole k1 and an adjacent hanging hole k1 is controlled to ensure that the plurality of hanging positions on the box 10 are basically evenly distributed, so that the vehicle body 200 is evenly stressed, thereby improving the connection stiffness between the vehicle body 200 and the box 10 at various positions.

It can be understood that, in some other embodiments, if it is necessary to realize personalized settings, for example, it is necessary to divide the hanging portions 13a3 into a dense hanging region and a sparse hanging region, the distance between the hanging holes k1 in the dense hanging region (that is, the distance L2) may be set as close to 80 mm as possible, and the distance between the hanging holes k1 in the sparse hanging region (that is, the distance L2) may be set as close to 500 mm as possible, so as to meet the personalized requirements for local intensive hanging and local sparse hanging.

In some embodiments, referring to Figs. 13 to 14, a distance L2 between the geometric centers of the orthographic projections of every two adjacent hanging portions 13a3 on the second region hb is 80 mm-300 mm.

If the distance L2 is in the range of 80 mm-300 mm, it is possible to ensure the uniform connection between the battery 100 and the external device, and also to ensure the connection strength between the battery 100 and the external device.

In some embodiments, referring to Figs. 13 to 14, the top surface h of the box 10 is further provided with a sealing region hc. The sealing region hc is provided between the first region ha and the second region hb, and the sealing region hc surrounds the first region ha. The sealing region hc is configured to mount a sealing member 12, and the sealing member 12 is configured to be in contact with the external device.

The sealing region hc is also a part of the top surface h of the box 10, which is located between the first region ha and the second region hb such that the first region ha and the second region hb are separated from each other to form a non-communication relationship. The area of the sealing region hc should not be too large, and its main function is to mount the sealing member 12 to realize the mutual isolation of the first region ha and the second region hb. The sealing region should be configured to conform to the size, volume, and shape of the sealing member 12 as much as possible to ensure that the entire sealing member 12 is assembled in the sealing region hc.

It can be understood that the sealing member 12 has different states in the sealing region hc. When the sealing member 12 is in contact with the external device and the box 10 is fixedly connected to the external device, the sealing member 12 is in a compressed state, in which it will be deformed to some extent to ensure the sealing. When the battery 100 is separated from the external device, the sealing member 12 returns to its original state.

In a specific embodiment, if the external device is defined as the vehicle body 200 of the vehicle 1000, the battery 100 may be mounted to a bottom portion of the vehicle body 200, and is sealingly connected to the vehicle body 200 via a sealing member 12 in a sealing region hc. In this case, the first region ha forms a closed interior of the vehicle body 200, and the second region hb is the outside of the vehicle body 200. Fluid or solid particles outside the vehicle body 200 cannot leak into the interior of the vehicle body 200, such as flying stones or splashed liquid cannot hit the interior of the vehicle body 200 during traveling of the vehicle 1000, thereby realizing the sealing and structural reliability of the interior of the vehicle body 200.

It can be understood that, when the box 10 includes a sealing member 12, the sealing member 12 is mounted in the sealing region hc to seal and isolate the first region ha from the second region hb. The specific arrangement of the sealing member 12 has been described in detail above and will not be repeated here. In addition to including the first region ha, the sealing region hc and the second region hb, the top surface h of the box 10 may further include other regions, which may be arranged inside the first region ha or outside the second region hb, which will not be specifically limited in the present application.

In some embodiments, referring to Figs. 13 to 14, the shortest distance L1 between the geometric center of the orthographic projection of the hanging portion 13a3 on the second region hb and an outer edge of the sealing region hc is 30 mm-200 mm.

The hanging portion 13a3 is projected on the second region hb in the direction perpendicular to the second region hb. When the hanging portions 13a3 are connected to the external device, each hanging portion 13a3 has a hanging stress point, and the geometric center of the orthographic projection of each hanging portion 13a3 on the second region hb is the hanging stress point of the hanging portion 13a3. The shortest distance L1 between the geometric center of the orthographic projection of the hanging portion 13a3 on the second region hb and the outer edge of the sealing region hc is the shortest distance between the hanging stress point of each hanging portion 13a3 and the outer edge of the sealing region hc.

The outer edge of the sealing region hc is a boundary line shared by the sealing region hc and the second region hb. Naturally, the sealing region hc also has an inner edge, which is a boundary line shared by the sealing region hc and the first region ha. When the sealing member 12 is being assembled, two side edges of the sealing member 12 coincide with the inner and outer side edges of the sealing region hc, so that the sealing member 12 completely covers the sealing region hc.

The shortest distance L1 between the geometric center of the orthographic projection of the hanging portion 13a3 on the second region hb and the outer edge of the sealing region hc refers to the length value of a perpendicular line drawn from the geometric center of each hanging portion 13a3 to the outer edge of the sealing region hc, to ensure that the distance between the sealing member 12 and the hanging portion 13a3 is within a defined range.

In a specific embodiment, for example, the external device is defined as the vehicle body 200 of the vehicle 1000, the shortest distance between the hanging stress point of the hanging portion 13a3 and the outer edge of the sealing region hc (that is, the distance L1) being controlled to be 30 mm-200 mm can avoid that the hanging stress point of the hanging portion 13a3 is too far away from the sealing member 12, so as to ensure the sealing effect of the sealing member 12 on the interior of the vehicle body 200, and also to reduce the hanging torque of each hanging portion 13a3 hanged to the vehicle body 200, thereby effectively shortening the hanging arm of force and ensuring the connection rigidity between the battery 100 and the vehicle body 200.

In some embodiments, referring to Figs. 13 and 14, the shortest distance L1 between the geometric center of the orthographic projection of the hanging portion 13a3 on the second region hb and the outer edge of the sealing region hc is 50 mm-100 mm.

Within the range of 50 mm-100 mm, it is possible to prevent the hanging stress point of the hanging portion 13a3 from being too far away from the sealing member 12, thereby ensuring the sealing and isolation effect of the sealing member 12 on the first region ha and the second region hb, and also to ensure the connection strength of the battery 100 to the external device.

In some embodiments, the sealing region hc and the second region hb are coplanar.

Coplanar, also known as co-planar, means that the sealing region hc and the second region hb share the same plane in a three-dimensional space. In this case, the sealing region hc and the second region hb are both configured as flat planes without forming an angle therebetween.

In a specific embodiment, when the external device is defined as the vehicle body 200 of the vehicle 1000, and the top portion of the box 10 is assembled to the bottom portion of the vehicle body 200, the sealing region hc and the second region hb have the same height in the vertical direction, and the sealing region hc is configured to arrange a sealing member 12 to perform the sealing function. The second region hb is configured with a hanging member to perform the hanging function. In this case, the hanging stress point of each hanging portion 13a3 is located in the same plane and at the same height as the sealing region hc. The hanging stress point and the sealing member 12 only bear the force in the vertical direction, thereby reducing the lateral structural stress of the box 10 and the vehicle body 200 and improving the rigidity of the vehicle 1000.

In some embodiments, referring to Fig. 11, the first region ha, the second region hb and the sealing region hc are coplanar.

In this case, the plane where the first region ha, the second region hb and the sealing region hc are coplanar is in contact with the external device, and the contact area between the top surface h of the box 10 and the external device is relatively large, facilitating the improvement of the connection reliability between the box 10 and the external device. Moreover, the top portion of the box 10 has a relatively flat structure and is more attractive.

When the external device is defined as the vehicle body 200 of the vehicle 1000, the inner region of the vehicle body 200, the outer region of the vehicle body 200 and the sealing region hc formed on the top surface h of the box 10 are all arranged in the same plane, so as to ensure that the inside of the vehicle body 200 of the box 10 and the outside of the vehicle body 200 both only bear the force in the vertical direction, so as to further reduce the lateral structural stress of the vehicle 1000.

In some embodiments, referring to Fig. 14, when the hanging portion 13a3 includes at least one hanging hole k1, all the hanging holes k1 penetrate the second region hb.

For the introduction of the hanging hole k1, reference may be made to what has been described above, and details are not repeated here. Where the hanging hole k1 is configured to penetrate the second region hb, when connecting the box 10 to the external device, a connector can be connected to the top portion of the box 10 from the second region hb of the relatively outer periphery of the top portion of the box 10, to improve the connection strength between the box 10 and the external device.

In some embodiments, referring to Fig. 14, there is a reserved distance between the outer edge of the sealing region hc that is close to the second region hb and the peripheral side wall n of the main body 11.

For the introduction of the peripheral side wall n of the main body 11, reference may be made to what has been described above, and details are not repeated here. The outer edge of the sealing region hc that is close to the second region hb is not vertically coplanar with the plane where the peripheral side wall n of the main body 11 is located, so that there is a reserved distance between the outer edge of the sealing region hc and the outer edge of the top surface h1 of the main body 11.

When the sealing member 12 is being assembled and the sealing member 12 is yet not deformed, the two side edges of the sealing member 12 coincide with the inner and outer side edges of the sealing region hc. When the sealing member 12 is sealingly connected to the external device, the sealing member 12 is deformed such that its two sides overflow the sealing region hc, with one side extending beyond the sealing region hc into the first region ha, and the other side extending beyond the sealing region hc into the second region hb.

A reserved distance is set between the outer edge of the sealing region hc that is close to the second region hb and an axial side wall of the main body 11, so that enough deformation space can be reserved for the deformation of the sealing member 12, to prevent the sealing member 12, during deformation, from overflowing over the top surface h1 of the main body 11 to other regions of the top portion of the box 10 and interfering with structures in the other regions.

In some embodiments, referring to Figs. 11 and 13, the top surface h1 of the main body 11 defines and forms at least part of the top surface h of the box 10.

The top surface h1 of the main body 11 refers to a side surface of the main body 11 that is located at its top portion and faces away from the accommodating cavity s. When the box 10 includes both the main body 11 and the lateral beam 13 in the above embodiments, the top surface h of the box 10 may be defined jointly by the top surface h1 of the main body 11 and the top surface h2 of the lateral beam 13. The top surface h1 of the main body 11 and the top surface h2 of the lateral beam 13 may be coplanar. In this case, the contact area between the top surface h of the box 10 and the external device is relatively large, facilitating the improvement of the connection reliability between the box 10 and the external device. Moreover, the top portion of the box 10 has a relatively flat structure and is more attractive. Of course, the top surface h1 of the main body 11 and the top surface h2 of the lateral beam 13 may alternatively be non-coplanar.

In other embodiments, the box 10 may also include structures other than the main body 11 and the lateral beam 13. In this case, the top surface h of the box 10 is defined and formed jointly by the top surface h1 of the main body 11, the top surface h2 of the lateral beam 13, and the top surfaces of the other structures.

It can be understood that the first region ha and the sealing region hc are located in the top surface h1 of the main body 11, and in addition to including the first region ha and the sealing region hc, the top surface h1 of the main body 11 may further include other regions, which will not be specifically limited here.

In some embodiments, referring to Figs. 11 and 13, at least part of the second region hb and the first region ha are located in the top surface h1 of the main body 11.

The top surface h1 of the main body 11 is divided into a first region ha, a sealing region hc surrounding the outside of the first region ha, and a second region hb surrounding the outside of the sealing region hc. When the sealing member 12 in the sealing region hc is compressed and deformed, one side edge of the sealing member 12 extends into the second region hb in the top surface h1 of the main body 11.

It can be understood that the second region hb in the top surface h1 of the main body 11 is the reserved distance between the outer edge of the sealing region hc that is close to the second region hb and the peripheral side wall n of the main body 11, so as to ensure that sufficient deformation space is reserved for the deformation of the sealing member 12, and to prevent the sealing member 12, during deformation, from overflowing over the top surface h1 of the main body 11 to the lateral beam 13.

In some embodiments, the hanging portion 13a3 is located in the second region hb defined by the top surface h2 of the lateral beam 13.

For the introduction of the hanging hole k1, reference may be made to what has been described above, and details are not repeated here. The hanging hole k1 is provided in the second region hb defined by the top surface h2, and also has the beneficial effect of the hanging portion 13a3 being arranged at the top portion of the lateral beam 13, which will not be repeated here.

When the box 10 includes both the main body 11 and the lateral beam 13 in the above embodiments, the top surface h of the box 10 may be defined jointly by the top surface h1 of the main body 11 and the top surface h2 of the lateral beam 13. A reserved distance is set between the outer edge of the sealing region hc that is close to the second region hb and an axial side wall of the main body 11, so that enough deformation space can be reserved for the deformation of the sealing member 12, to prevent the sealing member 12, during deformation, from overflowing over the top surface h1 of the main body 11 to the top surface h2 of the lateral beam 13 and interfering with the hanging of the hanging portion 13a3 on the lateral beam 13.

In some embodiments, referring to Fig. 14, the hanging portion 13a3 is provided on the first sub-beam 13a1 and/or the second sub-beam 13a2, and in the first direction F1 and/or the second direction F2, a distance L2 between the geometric centers of the orthographic projections of every two adjacent hanging portions 13a3 on the second region hb is 80 mm-500 mm.

For the introduction of the first sub-beam 13a1 and the second sub-beam 13a2, reference may be made to what has been described above, and details are not repeated here. Two first sub-beams 13a1 extend in the first direction F1, two second sub-beams 13a2 extend in the second direction F2, and the first sub-beams 13a1 and/or the second sub-beams 13a2 are provided with hanging portions 13a3 respectively, such that the hanging portions 13a3 extend in the first direction F1 and/or the second direction F2, so as to form uniform hanging and fixing with respect to the external device in multiple directions, to further improve the connection between the external device and the box 10.

Moreover, it is defined that in a set direction, the distance between the geometric centers of the orthographic projections of every two adjacent hanging portions 13a3 on the second region hb and the distance between the geometric centers of adjacent hanging holes k1 is within a defined range, to ensure that the set distance between a hanging hole k1 and an adjacent hanging hole k1 is controllable in the extending direction of the first sub-beam 13a1 and in the extending direction of the second sub-beam 13a2, so that the vehicle body 200 is stressed uniformly.

It can be understood that when the box 10 includes a middle channel beam 16, the middle channel beam 16 is located in the first region ha, so that the middle channel beam 16 can be located in the middle region of the main body 11.

In an embodiment, the box 10 includes the main body 11 and the high-voltage compartment 15 as described above. The battery cavity s1 is formed in the main body 11, the high-voltage compartment 15 is arranged at the top portion of the main body 11 and is located in the first region ha, and the high-voltage compartment 15 encloses, itself or together with the main body 11, the high-voltage cavity s2. Since the first region ha forms most of the region of the top portion of the main body 11, the arrangement of the high-voltage compartment 15 in the first region ha can improve the space utilization rate of the first region ha.

According to some embodiments of the present application, referring to Figs. 3 and 4, the present application provides a battery 100, including the box 10 described in any of the above embodiments and a battery cell 20. The battery cell 20 is accommodated in the accommodating cavity s. Since the battery 100 includes the box 10, it has all the beneficial effects of the box 10, which will not be repeated here.

In some embodiments, the battery 100 further includes a high-voltage casing (not shown). The box 10 is provided with a battery cavity s1 and a high-voltage cavity s2 which are arranged separately from each other. The battery cavity s1 is configured to accommodate the battery cell 20, and the high-voltage cavity s2 is configured to accommodate a high-voltage casing.

The high-voltage casing is an important safety barrier for a battery 100 group, and is internally equipped with a high-voltage control system which is mainly configured to: turn on or off a high-voltage circuit according to the electrical control requirements of the vehicle; provide current and leakage detection terminals; perform controllable load cut-off when the external current of the battery 100 group is too large; turn off the high-voltage circuit to prevent the battery 100 group from catching fire when a short circuit occurs in an external circuit of the battery 100 group; and be able to easily cut off the high-voltage circuit when the battery 100 group is being repaired.

In this case, the current of all the battery cells 20 is connected and collected by means of the high-voltage casing, and safe electric energy is provided to the outside, so that the battery 100 can safely supply power to the outside. Regarding the specific configuration of the high-voltage casing, reference may be made to conventional arrangements in the art, and the present application does not involve specific improvements to the high-voltage casing.

In some embodiments, referring to Figs. 10 and 20, the box 10 includes a main body 11. The main body 11 encloses the accommodating cavity s, the main body 11 includes a carrier 11a located at the top portion of the box 10 and configured to define the accommodating cavity s, and the battery cell 20 is arranged at the carrier 11a.

For the description of the main body 11, the top portion of the box 10, and the carrier 11a, reference may be made to what has been described above, and details are not repeated here. In this case, the carrier 11a is a component capable of carrying the weight of the battery cell 20, and may be a carrying plate, a carrying block, a carrying sheet, a carrying frame, etc., and will not be specifically limited.

Specifically, it is possible that the battery cell 20 may be arranged below the carrier 11a, and bears the force on the top portion of the box 10 of the battery 100 together with the carrier 11a, thereby increasing the rigidity of the top portion of the box 10 of the battery 100.

In some embodiments, referring to Figs. 10 and 20, the battery cell 20 is suspended from the carrier 11a.

By the battery cell 20 being suspended from the carrier 11a, it is meant that the battery cell 20 is arranged vertically below the carrier 11a, and the weight of the battery cell 20 is borne by the carrier 11a. The way to suspend the battery cell 20 from the carrier 11a includes: directly bonding the battery cell 20 to a lower surface of the carrier 11a, connecting the battery cell 20 to the carrier 11a by a fastener and locating the battery cell below the carrier 11a, and hanging the battery cell 20 to the carrier 11a via a hook or the like and locating the battery cell below the carrier 11a.

In this case, the battery cell 20 is suspended below the carrier 11a, and the bottom cover 11c is located at the bottom portion of the box 10. When the interior of the battery 100 is being repaired, the battery cell 20 can be exposed by removing the bottom cover 11c, without the need to remove the carrier 11a, so that the maintenance of the battery 100 is more convenient. Moreover, when repairing the battery 100, the battery cell 20 can be disassembled from below the carrier 11a. Especially when the carrier 11a is stressed as at least part of the chassis of the vehicle 1000, it is only necessary to disassemble the battery cell 20 from below the carrier 11a without the need to remove the carrier 11a, facilitating the repairing of the battery 100.

In some embodiments, the battery cell 20 is bonded to the carrier 11a.

Specifically, the bonding between the battery cell 20 and the carrier 11a may be achieved by an adhesive such as epoxy adhesive and acrylate adhesive, which will not be specifically limited. In this case, the bonding between the battery cells 20 and the carrier 11a not only facilitates the connection, but can also simplify the structure of the battery 100.

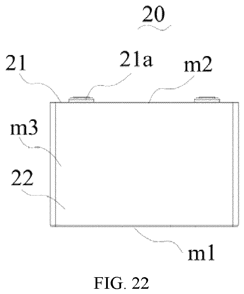

Fig. 22 is a schematic structural view of a battery cell 20 according to some embodiments of the present application.

In some embodiments, referring to Fig. 22, an outer surface of the battery cell 20 that faces the carrier 11a is defined as a first outer surface m1, and the battery cell 20 includes electrode terminals 21a. The electrode terminals 21a are arranged on an outer surface of the battery cell 20 other than the first outer surface m1.

As described above, the electrode terminals 21a are configured for electrical connection with the electrode assembly 23 inside the battery cell 20 for outputting or inputting electric energy of the battery cell 20. The electrode terminals 21a at least partially protrude from the battery cell 20, so as to be electrically connected to the outside. The series connection and the parallel connection between the battery cells 20 are each realized by the series connection and the parallel connection between the respective electrode terminals 21a. The electrode terminals 21a are electrically conductive to realize electrical transmission, and may be aluminum electrodes, copper electrodes, etc.

The electrode terminals 21a are arranged on the outer surface of the battery cell 20 other than the first outer surface m1. The first outer surface m1 faces the carrier 11a, and is generally a smooth surface, from which structures such as electrode terminals 21a and a filling hole protrude or are recessed. When the battery cell 20 is suspended from the carrier 11a, the first outer surface m1 is an upward outer surface of the battery cell 20. Specifically, in an embodiment, the battery cell 20 includes the housing 22 and the end cover 21 as described above. The housing 22 and the end cover 21 form the internal environment of the battery cell 20 for accommodating the electrode assembly 23. The end cover 21 is located at one end of the housing 22, and the electrode terminals 21a are arranged on the end cover 21. In this case, any outer surface of the housing 22 may be used as the first outer surface m1 of the battery cell 20.

The electrode terminals 21a include a positive terminal and a negative terminal. The positive terminal is configured for electrical connection with a positive plate in the electrode assembly 23, and the negative terminal is configured for electrical connection with a negative plate in the electrode assembly 23. It should be noted that the positive terminal and the negative terminal may be arranged on the same outer surface of the battery cell 20 (such as a square battery cell), or may be arranged on two different outer surfaces of the battery cell 20 (such as a cylindrical battery cell). When the positive terminal and the negative terminal are arranged on two different outer surfaces of the battery cell 20, the first outer surface m1 is a surface of the battery cell 20 that is different from the two outer surfaces.

In addition to the battery cells 20, the battery 100 is generally provided with components such as a sampling wire harness electrically connected to each battery cell 20, a high-voltage wire harness, and a protective structure for protecting the battery cells 20. In this case, the electrode terminals 21a are arranged on a surface of the battery cell 20 other than the first outer surface m1, when the components such as the sampling wire harnesses, the high-voltage wire harnesses and the protective structure on the electrode terminals 21a, will not be restricted by the carrier 11a, and the components can be arranged in the space between the battery cell 20 and structures of the main body 11 other than the carrier 11a (e.g., in the space between the battery cell 20 and the bottom cover 11c, and/or the space between the battery cell 20 and the inner side surface of the main body 11), making the arrangement of the components more convenient. Moreover, since the first outer surface m1 is a smooth surface, the first outer surface m1 can be attached to the carrier 11a, so that the attachment and mounting of the battery cell 20 and the carrier 11a can be realized, and there is no need to reserve a space between the battery cell 20 and carrier 11a, facilitating the improvement of the space utilization rate of the battery 100.

In some embodiments, referring to Fig. 22, the battery cell 20 has a second outer surface m2 arranged opposite to the first outer surface m1, and the electrode terminals 21a are arranged on the second outer surface.

The second outer surface m2 is the outer surface of the battery cell 20 opposite to the first outer surface m1, and when the battery cell 20 is suspended from the carrier 11a, the second outer surface m2 is opposite to the bottom cover 11c.

Further, the battery cell 20 and the bottom cover 11c may be arranged spaced apart from each other. In this case, the external force acting on the bottom cover 11c can be prevented from being transmitted to the battery cell 20 and damaging the battery cell 20. Especially, when the battery 100 is mounted to the bottom portion of the vehicle 1000 and the bottom cover 11c is at the lowest point of the battery 100, the stones on the ground are likely to fly to the bottom portion of the battery 100 and hit the bottom cover 11c during the traveling of the vehicle 1000. In this case, the buffer space can interrupt the transmission of the external force to the battery cells 20 to affect the battery cell 20.

When the battery cell 20 and the bottom cover 11c may be arranged spaced apart from each other, there is a buffer space between the second outer surface m2 and the bottom cover 11c, and the part of each electrode terminal 21a protruding from the battery cell 20 is located in the buffer space, so that a wire harness and a connecting sheet which are connected to the electrode terminal 21a can be arranged in the buffer space. Moreover, the buffer space also has the aforementioned ability to prevent the external force hitting the bottom cover 11c from acting on the battery cell 20 and damaging the battery cell 20. Therefore, the buffer space can not only interrupt the influence of the external force, but can also carry out the layout of the wire harnesses, etc. In addition, the buffer space and the space utilization rate of the battery 100 are also improved.

In another aspect, the present application further provides an electrical apparatus. The electrical apparatus includes a battery 100 provided in any one of the above embodiments. The battery 100 is configured to supply electric energy to the electrical apparatus. For the introduction of the electrical apparatus, reference is made to what has been described above, and details are not repeated here.

Since the electrical apparatus includes the battery 100 as described above, it has all the beneficial effects of the above embodiments, which will not be repeated here.

Fig. 1 is a schematic view of a battery 100 applied to a vehicle body 200 according to some embodiments of the present application.

In some embodiments, the electrical apparatus includes a vehicle 1000. The battery 100 is arranged at a bottom portion of a vehicle body 200 of the vehicle 1000. For the introduction of the vehicle 1000, reference is made to what has been described above, and details are not repeated here.

The vehicle body 200 of the vehicle 1000 refers to the part of the vehicle 1000 that is configured to carry people and load goods, including a driver compartment, a passenger compartment, an engine compartment, a luggage compartment, etc. The vehicle body 200 generally includes a shell and doors, windows, decorations, seats 300, an air conditioning device, etc. arranged on the shell. The shell generally refers to a structure of the vehicle 1000 that is composed of main force bearing elements such as longitudinal beams, cross beams, a chassis and pillars, and sheet metal parts connected to them. In the embodiments of the present application, the battery 100 being arranged at the bottom portion of the vehicle body 200 mainly means that the battery 100 is arranged at a bottom portion of the shell.

In this case, the battery 100 is arranged at the bottom portion of the vehicle body 200, rather than occupying the space inside the vehicle body 200, thereby facilitating the reduction of the volume and weight of the vehicle body 200.

In some embodiments, the battery 100 is connected to the vehicle body 200 via the top portion of the box 10, and the top portion of the box 10 is configured to form at least part of the chassis of the vehicle body 200.

As a part of the vehicle body 200, the chassis is a combination of four parts: a transmission system, a driving system, a steering system and a brake system, and is configured to support and mount the engine of the vehicle 1000 and its components and assemblies, so as to form the overall shape of the vehicle 1000, withstand engine power and ensure the normal traveling.

The chassis is located at the bottom of the vehicle body 200, and the top portion of the box 10 is directly used as at least part of the chassis. That is, the top portion of the box 10 is configured to form at least part of the chassis of the vehicle body 200. In this way, the top portion of the box 10 is integrated with the chassis of the vehicle body 200, so that the space occupied by a gap between the traditional chassis and the battery 100 can be added to the interior of the battery 100 to increase the space of the battery 100, so that the increase of the energy of the battery 100 is facilitated, and the range of the vehicle 1000 can thus be improved.

According to some embodiments of the present application, the electrical apparatus includes a vehicle 1000, and a battery 100 is provided at a bottom portion of a vehicle body 200 of the vehicle 1000. The battery 100 includes a box 10 and a battery cell 20. The box 10 includes a carrier 11a at a top portion thereof. The battery cell 20 is located in the box 10 and suspended from the carrier 11a, and electrode terminals 21a of the battery cell 20 are located on an outer surface of the battery cell 20 that faces away from the carrier 11a. The carrier 1 1a forms at least part of the chassis of the vehicle 1000. In this case, the battery 100 being suspended from the carrier 11a alone can increase the strength of the carrier 11a and therefore the strength of the top portion of the battery cell 20, so that the carrier 11a can meet a certain force requirement when it is used as a chassis. Moreover, the electrode terminals 21a of the battery cell 20 face away from the carrier 11a, so that the battery cell 20 can be directly mounted to the carrier 11a, saving a gap between the battery cell 20 and the carrier 11a, and using the saved space to increase the mounting space of the battery cell 20 can increase the energy of the battery 100, thereby improving the range of the vehicle 1000.

According to some embodiments of the present application, referring to Figs. 1, 4, and 6 to 8, the electrical apparatus includes a vehicle 1000, and a battery 100 is provided at a bottom portion of a vehicle body 200 of the vehicle 1000. The battery 100 includes a box 10 and a battery cell 20. The box 10 includes a main body 11 and a mounting beam 141. The mounting beam 141 is arranged at a top portion of the main body 11, and a mounting position 141b is configured on a side of the mounting beam that faces away from the main body 11. The battery 100 is mounted to an external device via a top portion of the box 10, and the mounting position 141b forms a partial structure of the vehicle body 200. A seat 300 is mounted to the mounting position 141b and is fixedly connected to the mounting beam 141, that is, connected to the bottom portion of the vehicle body 200.

In this way, the mounting position 141b forms a part of the vehicle body 200, the connection between the seat 300 and the box 10 realizes the connection between the seat and the vehicle body 200, so that the assembly of the seat 300, the battery 100 and the vehicle body 200 is simple, and the connection structure between the box 10 and the vehicle body 200 has a smaller size and is more compact.

The various technical features of the embodiments described above can be arbitrarily combined. In order to simplify the description, all possible combinations of the various technical features in the above embodiments have not been described. However, any combination of these technical features should be considered to fall within the scope of the disclosure of this description as long as there is no contradiction.

The above embodiments only represent several implementations of the present application, and their descriptions are relatively specific and detailed, but should not be construed as limiting the scope of the patent of the present application. It should be noted that those of ordinary skill in the art could also make several variations and improvements without departing from the concept of the present application. These variations and improvements all fall within the scope of protection of the present application. Therefore, the scope of patent protection of the present application shall be subject to the appended claims.

## Claims

1. A box for a battery, the box being provided with an accommodating cavity for accommodating a battery cell, and a mounting position being configured on a side of a top portion of the box that faces away from the accommodating cavity;
wherein the battery is mounted to an external device via the top portion of the box, and the mounting position forms a partial structure of the external device.

2. The box according to claim 1, wherein the mounting position comprises a mounting hole formed in the top portion of the box.

3. The box according to either of claims 1-2, comprising a main body and a mounting beam, wherein the main body encloses the accommodating cavity, and a top portion of the main body forms at least part of the top portion of the box; and
the mounting beam is arranged at the top portion of the main body, and the mounting position is configured on a side of the mounting beam that faces away from the main body.

4. The box according to claim 3, wherein the mounting beam is fixedly connected to or integrally formed with the main body.

5. The box according to either of claims 3-4, wherein the mounting beam comprises at least one protrusion, each of the protrusions protrudes from the top portion of the main body in a direction away from the accommodating cavity, and each of the protrusions and the main body jointly form a weight-reducing channel; and
the mounting position is configured on a side of the protrusion that faces away from the main body.

6. The box according to claim 5, wherein all the protrusions extend in the same direction and are arranged spaced apart from each other.

7. The box according to either of claims 5-6, wherein the sides of all the protrusions that face away from the main body are located on the same plane.

8. The box according to any one of claims 1-7, wherein the top portion of the box is configured with a hanging portion, via which the battery is mounted to the external device.

9. The box according to claim 8, wherein the hanging portion comprises at least one hanging hole provided in the top portion of the box.

10. The box according to any one of claims 1-9, further comprising a sealing member arranged at the top portion of the box and configured to be sealingly connected to the external device.

11. A battery, comprising:
the box of any one of claims 1-10; and
a battery cell accommodated in the accommodating cavity.

12. The battery according to claim 11, wherein the box comprises a main body, the main body encloses the accommodating cavity, the main body comprises a carrier located at the top portion of the box and configured to define the accommodating cavity, and the battery cell is arranged at the carrier.

13. The battery according to claim 12, wherein the battery cell is suspended from the carrier.

14. The battery according to claim 13, wherein the battery cell is bonded to the carrier.

15. The battery according to any one of claims 11-14, wherein an outer surface of the battery cell that faces the carrier is defined as a first outer surface, and the battery cell comprises electrode terminals arranged on an outer surface of the battery cell other than the first outer surface.

16. The battery according to claim 15, wherein the battery cell has a second outer surface arranged opposite to the first outer surface, and the electrode terminals are arranged on the second outer surface.

17. An electrical apparatus, comprising the battery of any one of claims 11-16, the battery being configured to supply electric energy to the electrical apparatus.

18. The electrical apparatus according to claim 17, comprising a vehicle, wherein the battery is arranged at a bottom portion of a vehicle body of the vehicle.

19. The electrical apparatus according to claim 18, wherein the battery is connected to the vehicle body via the top portion of the box, and the top portion of the box is configured to form at least part of a chassis of the vehicle body.
